# EUROPÄISCHE PATENTSCHRIFT

(11) **EP 2 816 936 B1**
(45) Veröffentlichungstag und Bekanntmachung des Hinweises auf die Patenterteilung: **05.02.2020**
(21) Anmeldenummer: 13705951.5
(22) Anmeldetag: 12.02.2013
(51) Int. Cl.: A47J 31/40, A47J 31/54, A47J 31/60

(54) **SELBSTBEDIENUNGS-GETRÄNKEAUTOMAT mit GETRÄNKE-ZUBEREITUNGSMODUL**
SELF-SERVICE BEVERAGE DISPENSING MACHINE with BEVERAGE PREPARATION MODULE
DISTRIBUTEUR AUTOMATIQUE DE BOISSONS EN LIBRE SERVICE avec MODULE DE PRÉPARATION DE BOISSON

(30) Priorität: 21.02.2012 CH 2222012
(43) Veröffentlichungstag der Anmeldung: 31.12.2014
(73) Patentinhaber: Schaerer AG, 4528 Zuchwil (CH)
(72) Erfinder: LÜSSI, André, 3303 Jegenstorf (CH); MOSIMANN, Bruno, 3415 Rüegsauschachen (CH); EGLI, Peter, 3037 Herrenschwanden (CH); AEBERHARD, Bruno, 4528 Zuchwil (CH)
(74) Vertreter: IPrime Rentsch Kaelin AG
(86) Internationale Anmeldenummer: PCT/EP2013/052780
(87) Internationale Veröffentlichungsnummer: WO 2013/124188

(56) Entgegenhaltungen:
- EP-A1- 1 352 599
- WO-A1-2009/130099
- WO-A1-2011/135479
- WO-A2-2009/074555
- WO-A2-2009/140349
- CH-A5- 682 798
- DE-C1- 3 407 030

## Beschreibung

### TECHNISCHES GEBIET

Die Erfindung bezieht sich auf ein Getränke-Zubereitungsmodul, welches für den Einbau in einen Selbstbedienungs-Getränkeautomaten vorgesehen ist. Die Erfindung bezieht sich ferner auf Zusatzmodule für ein Getränke-Zubereitungsmodul sowie auf ein Auslaufmodul für ein Getränke-Zubereitungsmodul. Zudem bezieht sich die Erfindung auf einen Selbstbedienungs-Getränkeautomaten und auf ein Computerprogrammprodukt umfassend ein von einem Computer lesbares Medium mit einem darauf abgespeicherten Computerprogramm zum Betreiben eines Getränke-Zubereitungsmoduls.

### STAND DER TECHNIK

Den Stand der Technik beschreibt z.B. die WO2011/135479A1.

Im Stand der Technik sind Selbstbedienungs-Getränkeautomaten bekannt, welche in grossen Stückzahlen bei relativ günstigen Kosten hergestellt werden. Solche Automaten bieten einem Benutzer zu einem günstigen Preis verschiedene frisch zubereitete Getränke an, wie z.B. Milchkaffe, Cappuccino, Latte Macchiato, heisse Schokolade, Instantsuppe, etc. Nach Bezahlung mit einem Bezahlsystem, wie z.B. einem Geldprüfsystem, einem elektronischen Bezahlsystem, etc., wird dem Benutzer das gewünschte Getränk beispielsweise in einem Trinkbecher zubereitet, welcher beim Bezug des Getränks oft automatisch bereitgestellt wird. Die Qualität der Getränke bei Selbstbedienungs-Getränkeautomaten ist jedoch insbesondere bei Kaffeegetränken nicht immer befriedigend, da das Getränk durch Mischung von Pulver mit heissem Wasser hergestellt wird.

Die Verwendung von Pulver hat jedoch den Vorteil, dass eine vergleichsweise grosse Anzahl unterschiedlicher Getränke kostengünstig zur Verfügung gestellt werden können.

Qualitativ hochwertige Getränke werden einem Benutzer in Lokalitäten wie einer Bar oder einem Restaurant angeboten. Dort wird das Getränk beispielsweise mit einer handbedienten, qualitativ hochstehenden Spezialmaschine hergestellt. Insbesondere mit handbedienten Kaffeemaschinen können Kaffeegetränke einer hochstehenden Qualität zubereitet werden. Sie erfordern jedoch einen erheblichen Bedienungs- sowie Wartungsaufwand und können von ungeschulten Personen kaum richtig bedient werden. In dieser Art zubereitete Getränke sind zwar qualitativ hochstehend, aber relativ teuer.

Selbstbedienungs-Kaffeeautomaten für die Herstellung von qualitativ hochstehenden Kaffeegetränken bei günstigeren Kosten sind ebenfalls bekannt. Solche Selbstbedienungs-Kaffeeautomaten werden aufgrund einer Spezifikation hergestellt, welche Anforderungen eines bestimmten Standorts oder einer Standortkategorie entsprechen. Standortkategorien umfassen beispielsweise Schulen, Werkstätten, Freizeitanlagen, Museen, Bürogebäude, etc. Je nach Standort oder Standortkategorie kann es erforderlich sein, Frischmilch, Milchpulver, mehrere Kaffeesorten oder Zusatzstoffe wie Schokoladenpulver oder Sirup anzubieten. Nachdem die Anforderungen festgelegt sind, werden die Bauteile des Selbstbedienungs-Kaffeeautomaten ausgewählt und daraus der entsprechende Selbstbedienungs-Kaffeeautomat hergestellt, welcher das gewünschte Angebot an Getränken anbietet. Für eine Massenanfertigung sind solche Selbstbedienungs-Kaffeeautomaten jedoch weniger geeignet, da die Vorgaben verschiedener Standorte oder Standortkategorien sehr unterschiedlich sind. Um alle Anforderung von Standorten oder Standortkategorien zu erfüllen, wäre eine unübersichtliche Anzahl unterschiedlicher Selbstbedienungs-Kaffeeautomaten erforderlich. Je nach Standort oder Standortkategorie ist zudem nicht nur der Aufbau eines Selbstbedienungs-Kaffeeautomaten erforderlich, sondern zugleich darauf abgestimmte Schränke oder Abstellflächen. Im Vergleich zu Selbstbedienungs-Getränkeautomaten sind die Kosten solcher Selbstbedienungs-Kaffeeautomaten höher. Hingegen wird eine ansprechende Vielfalt unterschiedlicher Getränke bei hoher Qualität angeboten.

Die US 2009/0293733 A1 zeigt einen Selbstbedienungs-Kaffeeautomaten mit welchem auf der Basis von frischen Zutaten wie frisch gemahlenem Kaffe oder frischer Milch ein Kaffeegetränk zubereitet wird. Der Automat verfügt über einen Ausgabemodus für die Zubereitung von Kaffeegetränken aufgrund von Instruktionen eines Benutzers. Ferner verfügt der Automat über einen Reinigungsmodus zur automatischen Reinigung. Zwischen Ausgabemodus und Reinigungsmodus wird gemäss einem Zeitschema oder aufgrund von Sensordaten umgeschaltet, wobei sichergestellt wird, dass nach dem Reinigungsmodus keine Reinigungsmittel in das Kaffeegetränk abgegeben werden.

Die US 4,211,342 zeigt einen Selbstbedienungs-Getränkeautomaten für heisse und kalte Getränke. Es sind Behälter vorgesehen für Schokolade, Kaffee, Zucker, Aufheller, etc. in getrockneter Form, welche bei der Zubereitung eines Getränks mit Wasser gemischt werden. Der Selbstbedienungs-Getränkeautomat weist ferner ein CO₂-Behälter, mehrere Sirup-Behälter und eine Kühleinrichtung auf.

Die WO 2006/135864 zeigt einen Selbstbedienungs-Kaffeeautomaten, welcher ein Kaffeebrühsystem, mehrere Aromabehälter und eine Mischkammer aufweist. In der Mischkammer können Milch, Dampf und Aromen gemischt werden. Eine Venturi-Einrichtung ermöglicht die Herstellung heisser oder geschäumter Milch. Es können aromatisierte Latte, Cappuccino, etc. zubereitet werden. Eine Erweiterbarkeit oder Ausführungen mit unterschiedlichen Getränkeangeboten sind nicht vorgesehen.

Die WO 93/07792 zeigt eine Kaffeemaschine mit einem Frischwasserbehälter, einem Kaffeesatzbehälter, einem Restwasserbehälter, einem Mahlwerk, Steuer- und Heizorganen und einer Brüheinrichtung. Die Brüheinrichtung ist und eine Antriebseinrichtung sind teilweise aus der Maschine herausziehbar, wobei eine Wirkverbindung mit elektrischer Energie weiter besteht, um die Funktionsprüfung durchzuführen. Der modulare Aufbau vereinfacht die Reinigungs-, Unterhalts-, Reparatur- und Prüfarbeiten. Eine Erweiterbarkeit oder Anpassung an verschiedene Standorte mit unterschiedlichen Anforderungen an die Getränkeauswahl ist nicht vorgesehen.

Die EP 0 761 150 zeigt eine Kaffeemaschine mit einer Extraktionsvorrichtung, einer Steuereinheit sowie einer Heisswasserversorgung als unabhängig ausgebildete Module, welche im eingeschobenen Zustand mit einem Steckerteil, das am Gehäuserahmen angebracht ist, gekoppelt sind. Bei Defekt kann ein Modul ohne Beizug eines Fachmanns ausgetauscht werden. Eine Erweiterbarkeit oder Ausführungen mit unterschiedlichen Getränkeangeboten sind nicht vorgesehen.

Die CH 682798 zeigt eine Kaffeemaschine, die aus mehreren in ein Gestell einschiebbare Baugruppen aufgebaut ist. Als zentrale Baugruppe ist ein Kaffeebrühmodul mit zwei Brühstellen vorgesehen, auf welchen im Wesentlichen alle beheizbaren Aggregate zusammengefasst sind. Es wird eine gute Zugänglichkeit und kompakter Aufbau bei optimalen Brühbedingungen erreicht. Eine Erweiterbarkeit oder Ausführungen mit unterschiedlichen Getränkeangeboten sind nicht vorgesehen.

Die US 5,957,033 zeigt eine Kaffeemaschine mit mehreren Modulen, welche im eingeschobenen Zustand mit einem am Gehäuse befestigten Stecker zusammenwirken. Der Zusammenbau der Kaffeemaschine ist sehr einfach und im Falle eines Defekts kann ein Modul ohne Fachmann ersetzt werden. Eine Erweiterbarkeit oder Ausführungen mit unterschiedlichen Getränkeangeboten sind nicht vorgesehen.

### DARSTELLUNG DER ERFINDUNG

Eine Aufgabe der Erfindung besteht darin, einen Selbstbedienungs-Getränkeautomaten vorzuschlagen, der mindestens gewisse Nachteile des Standes der Technik vermeidet oder gegenüber diesem Verbesserungen aufweist. Es ist insbesondere eine Aufgabe der Erfindung ein Getränke-Zubereitungsmodul, Zusatzmodule und ein Auslaufmodul für den Einbau in einen Selbstbedienungs-Getränkeautomaten vorzuschlagen, mit welchem an unterschiedlichen Standorten oder Standortkategorien ein Selbstbedienungs-Getränkeautomat für die Zubereitung von qualitativ hochstehenden Getränken kostengünstig herstellbar ist.

Diese Aufgabe wird durch die im unabhängigen Patentanspruch definierten Merkmale gelöst.

Ein Getränke-Zubereitungsmodul ist vorgesehen für den Einbau in einen Selbstbedienungs-Getränkeautomaten und umfasst: einen Wasseranschluss und eine Zubereitungseinrichtung zur Zubereitung eines Getränks mit am Wasseranschluss bereitgestelltem Wasser, eine Kommunikationsschnittstelle und eine Steuereinheit, an welche über die Kommunikationsschnittstelle Getränke-Zubereitungsparameter übermittelbar sind, und welche eingerichtet ist, die Zubereitungseinrichtung zu steuern, um aufgrund der Getränke-Zubereitungsparameter ein Getränk zuzubereiten, und einen Getränkeauslauf zum Ableiten des von der Zubereitungseinrichtung zubereiteten Getränks. Je nach gewünschtem Angebot von Getränken können Zusatzmodule bei der Herstellung eines Selbstbedienungs-Getränkeautomaten ausgewählt und zusammengestellt werden. Im Betrieb des Selbstbedienungs-Getränkeautomaten kann das Getränkeangebot durch den Austausch von Zusatzmodulen einfach an geänderte Bedürfnisse angepasst werden. Die Kommunikationsschnittstelle ist eingerichtet, um Getränkezubereitungsparameter zu übermitteln, welche beispielsweise auf einer Bedieneinheit eines Getränkeautomaten erstellt werden. Die Steuereinheit wertet die übermittelten Getränkezubereitungsparameter aus, worauf eine Zubereitung eines Getränks erfolgt. Die Kommunikationsschnittstelle ist deshalb vorzugsweise optimiert auf die Übermittlung von Getränkezubereitungsparametern.

Das Getränke-Zubereitungsmodu umfasst mindestens eine Zusatzmodulschnittstelle zur Verbindung der Steuereinheit mit mindestens einem Zusatzmodul. Die Steueraufgaben der Zusatzmodule können somit vom Getränke-Zubereitungsmodul wahrgenommen werden. In einer Alternative wird die Steuerung der Zusatzmodule durch irgendeine andere Steuereinheit wahrgenommen, beispielsweise durch ein Bedienteil eines Selbstbedienungs-Getränkeautomaten.

Weiter umfasst das Getränke-Zubereitungsmodul mindestens eine Zusatzfluidschnittstelle für die Verbindung des Wasseranschluss und/oder der Zubereitungseinrichtung mit mindestens einem Zusatzmodul. Die im Getränke-Zubereitungsmodul vorhandenen fluidbasierten Einrichtungen, wie z.B. Heisswasser- oder Dampfeinrichtungen, können auch von den Zusatzmodulen genutzt werden, um Getränke oder Teile von Getränken herzustellen, beispielsweise geschäumte Milch, eine auf Pulver und Heisswasser basierte Instantsuppe, etc.

Weiter umfasst das Getränke-Zubereitungsmodul mindestens eine der folgenden Komponenten: eine Wasserpumpe, einen Kaffeeboiler, einen Heisswasserboiler, einen Dampfboiler, eine Kaffeebrüheinheit, eine Kaffeemühle, eine Antriebseinrichtung für eine Kaffeebrüheinheit, eine Kaffeesatz-Auswurfeinrichtung, eine Service-Bedieneinheit. Das Getränke-Zubereitungsmodul umfasst die Bestandteile, um einen qualitativ hochstehenden Kaffee herzustellen. Für viele Getränke ist ein qualitativ hochstehender Kaffee die Grundlage, um ein qualitativ hochstehendes Getränk zu erhalten. Eine solches Getränke-Zubereitungsmodul bietet somit eine oft gewünschte Basis, um ein qualitativ hochstehendes Getränke herzustellen.

Am Getränke-Zubereitungsmodul ist eine Zusatzmodulschnittstelle für den Anschluss von mindestens einem der folgenden Zusatzmodule eingerichtet: ein Milchmodul, ein Pulvermodul, ein Sirupmodul, ein Reinigungsmodul. Mit diesen Zusatzmodulen wird bereits eine grosse Vielfalt für das Getränkeangebot zur Verfügung gestellt. Mit dem Milchmodul kann heisse Milch für Schokolade oder Milchkaffee hergestellt werden. Das Pulvermodul ermöglicht die Herstellung von durch Mischung von Pulver und heissem Wasser herstellbare Getränke, wie beispielsweise Instantsuppe. Mit dem Sirupmodul lassen sich Getränke durch Beigabe konzentrierter Geschmackssirupe insbesondere geschmacklich abrunden.

Vorzugsweise ist am Getränke-Zubereitungsmodul mindestens eine Zusatzfluidschnittstelle für eine der folgenden Verbindungen eingerichtet: zwischen einem Heisswasserboiler der Zubereitungseinrichtung und einem Pulvermodul, zwischen einem Dampfboiler der Zubereitungseinrichtung und einem Milchmodul, zwischen der Zubereitungseinrichtung und einem Reinigungsmodul, zwischen einem Reinigungsmodul und einem Milchmodul, zwischen einem Reinigungsmodul und einem Auslaufmodul. Die Zusatzfluidschnittstellen können mehrfach ausgeführt sein und es können Reserveschnittstellen vorgesehen sein. Die Versorgung von Zusatzmodulen mit Heisswasser oder Dampf kann bei der Herstellung eines Selbstbedienungs-Getränkeautomaten und bei dessen Betrieb flexibel gewährleistet werden.

Vorzugsweise umfasst das Getränke-Zubereitungsmodul ein Modulgehäuse, welches insbesondere abgedichtet ausgeführt ist. Das Modulgehäuse kann aus einem stabilen, leichten Material wie z.B. Aluminium hergestellt sein. Dadurch wird das Getränke-Zubereitungsmodul zu einer abgeschlossenen Einheit, welche in Selbstbedienungs-Getränkeautomaten einbaubar ist, wobei die Komponenten der Getränke-Zubereitungseinheit beim Einbau und im Betrieb geschützt sind. Mit einem abgedichteten Modulgehäuse kann insbesondere ein Spritzwasserschutz gewährleistet werden. Dadurch werden die Komponenten des Getränke-Zubereitungsmodul insbesondere beim Nachfüllen von Zutaten oder bei Reinigungsarbeiten geschützt.

Vorzugsweise ist das Getränke-Zubereitungsmodul ganz oder teilweise nur mit einem Spezialwerkzeug öffenbar. So kann gewährleistet werden, dass das Getränke-Zubereitungsmodul teilweise oder ganz nur von geschultem Servicepersonal geöffnet werden kann. Andere Personen, welche den Selbstbedienungs-Getränkeautomaten öffnen können, wie z.B. ein Bedienpersonal welches Zutatenbehälter auffüllt, haben keinen oder nur teilweise Zugriff auf die Komponenten des Getränke-Zubereitungsmoduls.

Vorzugsweise umfasst das Getränke-Zubereitungsmodul eine Überwachungsschnittstelle zur Datenübertragung mit einer entfernten Datenverarbeitungsvorrichtung wie beispielsweise einer Computerzentrale zur Überwachung von Getränke-Zubereitungsmodulen. Betriebsdaten wie Anzahl ausgegebene Getränke, Status der Komponenten des Getränke-Zubereitungsmoduls, Anzahl und Art der Zusatzmodule, Füllstand von Zutatenbehältern der Zusatzmodule und des Getränke-Zubereitungsmoduls, etc. können so zentral überwacht werden. In einer Ausführungsvariante ist es vorgesehen, dass die Betriebsdaten von der Zentrale abgefragt werden. In einer anderen Ausführungsvariante werden die Betriebsdaten vom Getränke-Zubereitungsmodul beispielsweise in regelmässigen Zeitintervallen an die Zentrale gesendet. Die Kommunikation zwischen dem Getränke-Zubereitungsmodul und der Zentrale kann beispielsweise über ein IP basiertes Netzwerk (Internet Protocol) erfolgen.

Vorzugsweise umfasst das Getränke-Zubereitungsmodul einen Datenspeicher zur Abspeicherung von Betriebsdaten wie beispielsweise Anzahl zubereiteter Getränke, Füllstand von Zutatenbehälter und/oder zur Abspeicherung von Getränkerezeptdaten. Die Abspeicherung der Daten kann regelmässig erfolgen. So kann eine Betriebshistorie des Getränke-Zubereitungsmoduls gesammelt werden, welche beispielsweise in Störfällen ausgewertet werden kann oder dazu benutzt werden kann, um Prognosen betreffend die zukünftige Verfügbarkeit des Getränke-Zubereitungsmoduls zu treffen. Die Betriebsdaten können zusätzlich von am Getränke-Zubereitungsmodul angeschlossenen Zusatzmodulen und vom Auslaufmodul erfasst werden, wodurch sich die Störauswertung oder die Prognosen zusätzlich erweitern oder verbessern lassen.

Vorzugsweise umfasst das Getränke-Zubereitungsmodul ein Reinigungssoftwaremodul zur selbsttätigen Reinigung des Getränke-Zubereitungsmoduls und erforderlichenfalls daran angeschlossene Zusatzmodule. Am Getränke-Zubereitungsmodul kann insbesondere ein Reinigungsmodul als Zusatzmodul angeschlossen sein, welches eingerichtet ist Reinigungsmittel abzugeben. Die Steuerung erfolgt durch das Reinigungssoftwaremodul. Bei der Reinigung können weitere Komponenten zum Einsatz gebracht werden, wie das Heisswasser, Dampf, etc. Das Reinigungssoftwaremodul umfasst in einer Ausführungsvariante verschiedene Reinigungsprogramme, welche aufgrund von abgespeicherten Betriebsdaten ausgewählt werden.

Vorzugsweise umfasst das Getränke-Zubereitungsmodul ein Koordinationssoftwaremodul zur Koordination der Zubereitung von Getränken mit externen Vorrichtungen, welche mit dem Getränke-Zubereitungsmodul zusammenwirken. Das Koordinationssoftwaremodul erfasst Daten betreffend das Getränke-Zubereitungsmodul, die Zusatzmodule und dem Auslaufmodul. Aufgrund einer Auswertung dieser Daten koordiniert das Koordinationssoftwaremodul mit externen Vorrichtung wie einer Bedienvorrichtung eines Selbstbedienungs-Getränkeautomaten die Zubereitung von Getränken. Falls aufgrund gesammelter Daten erkannt wird, dass ein Getränk nicht mehr oder nicht mehr vollständig zubereitet werden kann, erfolgt durch das Koordinationssoftwaremodul eine entsprechende Koordination mit der Bedienvorrichtung. Beispielsweise wird danach der Bezug des Getränks gesperrt oder die Bezugsmöglichkeit dem Benutzer gar nicht mehr dargestellt.

Vorzugsweise umfasst das Getränke-Zubereitungsmodul ein Funktionstestsoftwaremodul zum Festlegen, welche Funktionen vom Getränke-Zubereitungsmodul durchgeführt werden und welche Funktionen von externen Vorrichtungen durchgeführt werden, welche mit dem Getränke-Zubereitungsmodul zusammenwirken. Die in den externen Vorrichtungen eingebauten Prozessoren können eine hohe Leistungsfähigkeit aufweisen, welche dadurch genutzt werden kann, dass beispielsweise Funktionen welche nicht sicherheitsrelevant sind ausgelagert werden. Falls das Getränke-Zubereitungsmodul in einem Selbstbedienungs-Getränkeautomaten eingebaut ist welcher ein leistungsfähiges Selbstbedienungsbedienteil aufweist, können beispielsweise Telemetriedaten durch das Selbstbedienungsbedienteil an eine Zentrale übermittelt werden. Dadurch wird das Getränke-Zubereitungsmodul entlastet vor den Aufgaben, welche für eine zuverlässige Übermittlung von Telemetriedaten erforderlich sind, also beispielsweise das Überprüfen, ob eine Verbindung zu einer Zentrale hergestellt werden kann, ob z.B. eine Datenbank der Zentrale verfügbar ist oder ob die Zentrale die Telemetriedaten vollständig empfangen hat.

Vorzugsweise umfasst das Getränke-Zubereitungsmodul eine Abrechnungs-Softwarekomponente für die Abrechnung von zubereiteten Getränken. Die Abrechnungs-Softwarekomponente ist beispielsweise als MDB-Softwarekomponente (multidrop bus) ausgeführt. Mit der MDB-Softwarekomponente wird eine Anbindung an gebräuchliche Abrechnungssysteme ermöglicht und eine robuste Abrechnung der bezogenen Getränke gewährleistet.

Vorzugsweise umfasst das Getränke-Zubereitungsmodul ein Assistenzsoftwaremodul zum Bestimmen von Bedienungsarbeiten, welche vom Bedienpersonal durchzuführen sind. Das Assistenzsoftwaremodul ist eingerichtet, Betriebsdaten wie den Verbrauch und den Füllstand von Zutaten zu erfassen. Aufgrund einer Auswertung dieser Daten wird vom Assistenzsoftwaremodul dem Bedienpersonal angezeigt, welche Zutaten nachgefüllt oder ersetzt werden müssen. Falls Zutaten nur noch in geringen Mengen vorhanden sind, kann durch das Assistenzsoftwaremodul explizit darauf hingewiesen werden. Das Bedienpersonal kann dann selbständig entscheiden, ob ein Nachfüllen oder Ersetzen sofort oder zu einem späteren Zeitpunkt durchgeführt werden soll. Neben der Anzeige des Füllstands kann das Assistenzsoftwaremodul auch eine Prognose bestimmen und anzeigen, wann mit zukünftigen Nachfüllen oder Ersetzen von Zutaten zu rechnen ist. Das Bedienpersonal kann diese Daten erfassen und für die Koordination von Arbeitsplänen verwenden. Die Verfügbarkeit und die Unterhaltskosten werden damit zusätzlich optimiert.

Vorzugswiese umfasst das Getränke-Zubereitungsmodul ein Ausrüstungsmodul zum Bestimmen von am besten geeigneten Zusatzmodulen und/oder Zutatenmengen. Das Ausrüstungsmodul erfasst insbesondere Verbrauchsdaten der Zutaten. Aus dem Verbrauch der Zutaten bestimmt das Ausrüstungsmodul, welche Zutaten in welchen Mengen vorliegen sollten, welche Zutaten nicht mehr anzubieten sind oder welche Zutaten neu angeboten werden könnten.

Im Rahmen der Erfindung gemäss Anspruch1, bezeiht sich die Erfindung ferner auf ein Zusatzmodul für ein Getränke-Zubereitungsmodul. Dieses umfasst: eine Zusatzmodulschnittstelle für den Anschluss an das Getränke-Zubereitungsmodul, wobei die Zusatzmodulschnittstelle für die Übertragung von elektrischer Energie und/oder elektrischer Steuersignale eingerichtet ist.

Vorzugsweise umfasst das Zusatzmodul eine Wasser- und/oder eine Dampfschnittstelle für den Anschluss an eine Wasser- und/oder Dampfschnittstelle des Getränke-Zubereitungsmoduls. Damit können im Getränke-Zubereitungsmodul vorhandene Einrichtungen auch vom Zusatzmodul genutzt werden und müssen im Zusatzmodul nicht separat angebracht sein.

Das Zusatzmodul weist eine der folgenden Modulfunktionen auf: Milchmodul, Pulvermodul, Sirupmodul, Reinigungsmodul. Mit diesen Funktionen wird ein flexibles Angebot unterschiedlicher Getränke ermöglicht, welches sich je nach Standort oder Standortkategorie einfach an die gewünschten Anforderung anpassen lässt.

In Rahmen der Erfindung gemäss Anspruch 1, bezieht sich die Erfindung auf ein Auslaufmodul für ein Getränke-Zubereitungsmodul und erforderlichenfalls eines oder mehrere Zusatzmodule. Dieses umfasst mindestens eines der folgenden Merkmale: Milchkanal, Dampfkanal, Milch-Dampf-Mischkammer, Pulvergetränkkanal, Kaffeekanal. Das Auslaufmodule wirkt flexibel mit den für die Ausrüstung eines Selbstbedienungs-Getränkeautomaten gewählten Getränke-Zubereitungsmodul und den Zusatzmodulen zusammen und mischt die einzelnen für die Zubereitung eines Getränks notwendigen Bestandteile, wobei eine hohe Qualität des Getränks gewährleistet ist.

Vorzugsweise sind am Auslaufmodul eine oder mehrere Komponenten wie beispielsweise ein Milchschäumerkopf als Verbrauchsteil austauschbar angeordnet. Um die Qualität des zubereiteten Getränks zu gewährleisten, werden Komponenten des Auslaufmoduls ersetzt, welche sich nicht beliebig oft reinigen lassen. In einer bevorzugten Ausführungsvariante bezieht sich der Milchschäumkopf auf eine Milchschäumvorrichtung wie aus der deutschen Gebrauchsmusterschrift mit der Nummer 20 2011 051719.5 derselben Anmelderin bekannt ist. Bezüglich des Aufbaus und der Funktionsweise einer solchen Milchschäumvorrichtung wird integral auf die vorstehenden Anmeldungen verwiesen. Deren leichte Austauschbarkeit und sichere Befestigung bei gleichzeitig flexibler Ausgestaltung der Schaumerzeugung sind im Zusammenhang mit den vorliegenden Anforderungen besonders vorteilhaft.

Das Auslaufmodul führt die im Getränke-Zubereitungsmodul und in den Zusatzmodulen hergestellten Getränketeile zusammen und gibt diese in einen Becher ab, in welchem die eigentliche Mischung der Getränketeile zum vollständig zubereiteten Getränk erfolgt. Im Milchmodul wird nur kalte Milch entweder geschäumt oder ungeschäumt zur Verfügung gestellt. Mit dem Milchschäumkopf des Auslaufmoduls wird die geschäumte oder die ungeschäumte Milch bei Bedarf mit Dampf erhitzt. Dadurch ergeben sich insgesamt vier Varianten von Milch, welche zur Zubereitung von Getränken zur Verfügung stehen: 1. kalte Milch, 2. kalte geschäumte Milch, 3. heisse Milch, 4. heisse geschäumte Milch. Dies führt zu einer Vergrösserung der Vielfalt von Getränken, welche an einem Standort oder für eine Standortkategorie zur Verfügung gestellt werden können.

In einer Ausführungsform ist die Steuereinheit des Geräte-Zubereitungsmoduls eingerichtet, nicht nur die Steuerung des Geräte-Zubereitungsmoduls, sondern auch die Steuerung der Zusatzmodule und des Auslaufmoduls durchzuführen. Die Steuerungsverbindungen zwischen den Einheiten ermöglichen es, von der Steuereinheit des Geräte-Zusatzmoduls beispielsweise ein PWM Signal (Pulse Width Modulation) zu übertragen, welches insbesondere von den Zusatzmodulen zur Steuerung eines Motors ausgewertet wird. In einer Ausführungsvariante erfolgt die Steuerung durch direktes Schreiben in ein Memory des Zusatzmoduls oder des Auslaufmoduls, welche den geschriebenen Inhalt auswerten und aufgrund der Auswertung eine Steuerung der im Zusatzmodul oder dem Auslaufmodul angeordneten Komponenten durchführt. So kann beispielsweise von der Steuereinheit ein Befehl an ein als Sirupmodul ausgeführtes Zusatzmodul abgesetzt werden, eine bestimmte Menge Sirup abzugeben, welcher Befehl vom Sirupmodul ausgewertet wird und die geforderte Menge Sirup abgegeben wird.

Im Rahmen der Erfindung gemäss Anspruch 1, bezieht sich die Erfindung auch auf einen Selbstbedienungs-Getränkeautomaten mit einem Getränke-Zubereitungsmodul und einem oder mehreren Zusatzmodulen. Dieser umfasst: einen Getränkeschrank, eine Halterung für ein Getränke-Zubereitungsmodul, eine oder mehrere Halterungen für ein oder mehrere Zusatzmodul.

Vorzugsweise sind am Selbstbedienungs-Getränkeautomat die Halterung für das Getränke-Zubereitungsmodul und/oder eines oder mehrere Zusatzmodule als Hängevorrichtung ausgeführt. Im Selbstbedienungs-Getränkeautomaten ist insbesondere eine mit einem Lochmuster versehene Wand vorgesehen. In die Löcher können Aufhängvorrichtungen eingehängt werden, an welche das Getränke-Zubereitungsmodul, Zusatzmodule und/oder das Auslaufmodul eingehängt werden können. Die Aufhängvorrichtung kann in der Form eines Schlüssellochs ausgeführt sein, welches am Selbstbedienungs-Getränkeautomaten angebracht ist und eingerichtet ist, um eine lösbare Schraube, welche an einem Zusatzmodul angebracht ist, einzuhängen, wobei anschliessend die lösbare Schraube wieder festgezogen wird. Dies ergibt eine schnelle und flexible Befestigung im Selbstbedienungs-Getränkeautomaten. Der Raum lässt sich zudem optimal nutzen, da das Lochmuster eine genügend feine gegenseitige Ausrichtung der einzelnen Module ermöglicht. Die Zusatzmodule werden danach am Getränke-Zubereitungsmodul angeschlossen, insbesondere über elektrische Leitungen und Schläuche. Das Auslaufmodul wird erforderlichenfalls über elektrische Leitungen am Getränke-Zubereitungsmodul und über Schläuche am Getränke-Zubereitungsmodul sowie den Zusatzmodulen angeschlossen. Die Herstellung des Selbstbedienungs-Getränkeautomaten ist dadurch sehr einfach. Zudem lässt sich der Selbstbedienungs-Getränkeautomat im Betrieb sehr einfach an geänderte Anforderungen betreffend der gewünschten Getränke anpassen, indem beispielsweise ein Zusatzmodul durch einfaches Aushängen von der Hängevorrichtung entfernt werden kann und ein anderes Zusatzmodul durch einfaches Einhängen in die Hängevorrichtung angebracht werden kann.

Vorzugsweise ist am Selbstbedienungs-Getränkeautomat ein Selbstbedienungsbedienteil für die Eingabe von Getränkezubereitungsparametern und die Auslösung der Zubereitung eines Getränks vorgesehen, insbesondere ein Touchscreen und vorzugsweise ein daran angeschlossener Personal Computer. Das Selbstbedienungsteil lässt sich für den Konsumenten einfach bedienbar und attraktiv ausgestalten. Insbesondere mit einem Touchscreen und daran angeschlossenem Computer ergeben sich besonderes attraktive Möglichkeiten, insbesondere betreffend eine intuitive Bedienbarkeit, Anpassung an die angebotenen Getränke und Anzeige von Zusatzinformationen. Auf dem Touchscreen können Werbung angezeigt werden, welche zusätzliche Einnahmen für den Betreiber des Selbstbedienungs-Getränkeautomaten ergeben. Der Touchscreen kann einfach an das Getränkeangebot oder die Tageszeit angepasst werden. So kann am Morgen auf einer Einstiegsseite prominent beispielsweise das Angebot von Kaffeegetränken angezeigt werden, wobei die anderen verfügbaren Getränke nur klein oder auf einer zweiten Seite angezeigt werden. Am Mittag kann beispielsweise das Angebot von Suppen besonders prominent dargestellt werden und am Abend beispielsweise das Angebot von Teegetränken.

Vorzugsweise ist am Selbstbedienungs-Getränkeautomat eine Türe vorgesehen, um einen Zugang zum Getränke-Zubereitungsmodul und erforderlichenfalls eines oder mehrere Zugangsmodule zu ermögliche, wobei insbesondere ein Bedienteil wie ein Selbstbedienungsbedienteil schwenkbar vorgesehen ist, so dass das Bedienteil auch bei geöffneter Türe benutzbar bleibt. Die Türe ermöglicht einen bequemen Zugang zu den im Selbstbedienungs-Getränkeautomaten angeordneten Komponenten, wobei insbesondere durch das schwenkbare Bedienteil Zusatzinformationen wie beispielsweise Füllstand von Zutatenbehälter, Betriebstemperaturen, etc. darstellbar bleiben. Dies ermöglicht es, den Service- oder Bedienpersonal Informationen anzugeben und die Qualität sowie Geschwindigkeit der durchzuführenden Arbeiten zu verbessern.

Vorzugsweise weist am Selbstbedienungs-Getränkeautomat die Türe eine erste Schliessvorrichtung auf und das Getränke-Zubereitungsmodul weist eine zweite Schliessvorrichtung auf. Das Bedienpersonal kann zwar Zutatenbehälter nachfüllen, wäre aber überfordert bei der Durchführung von Servicearbeiten. Demgegenüber ist das Servicepersonal in der Lage, sowohl das Nachfüllen von Zutaten als auch Servicearbeiten durchzuführen. Der Zugang zu den entsprechenden Bereichen ist die die erste und die zweite Schliessvorrichtung geregelt. Die Schliessvorrichtungen können Spezialwerkzeuge, Schlösser und Schlüssel, elektronische Code- oder Badge-Schlösser oder andere Schliessvorrichtungen betreffen.

Vorzugsweise ist am Selbstbedienungs-Getränkeautomat eine Reinigungssicherung vorgesehen, um während einer automatischen Reinigung von Gerätekomponenten den Zugang zu den Gerätekomponenten welche gereinigt werden zu verschliessen. Die Reinigungssicherung schützt insbesondere die Benutzer des Selbstbedienungs-Getränkeautomaten vor Verbrühungen, indem der Zugang zu Komponenten wie dem Auslaufmodul mit einer Sicherungstüre gesperrt wird oder das Auslaufmodul bei der Reinigung weggeschwenkt wird.

Vorzugswiese umfasst der Selbstbedienungs-Getränkeautomat ein Werbesoftwaremodul zum Abspielen von Werbung auf einem Display des Selbstbedienungs-Getränkeautomaten. Der Display kann ein in einem Bedienteil des Selbstbedienungs-Getränkeautomaten eingebautes Display betreffen, ein im Gehäuse des Selbstbedienungs-Getränkeautomaten eingebautes Zusatzdisplay oder ein anderes Display betreffen.

Durch das Abspielen von Werbung kann der Betreiber des Selbstbedienungs-Getränkeautomaten zusätzliche Einnahmen generieren.

Vorzugsweise umfasst der Selbstbedienungs-Getränkeautomat ein Watchdogsoftwaremodul zur Überwachung, dass auf einem Selbstbedienungsbedienteil immer die Möglichkeit für die Auswahl eines Getränks angezeigt wird. Dadurch wird gewährleistet, dass beispielsweise das Display eines Bedienteils nicht durch das Abspielen von Werbung blockiert ist.

Vorzugsweise umfasst der Selbstbedienungs-Getränkeautomat ein Bezugssoftwaremodul zum Anzeigen von Zusatzinformationen auf einem Display während der Zubereitung eines Getränks. Die Zusatzinformationen können beispielsweise die Zubereitungszeit betreffen für mit Teebeutel hergestellten Tee betreffen.

Im Rahmen der Erfindung gemäss Anspruch 1, ist die Erfindung auf ein Computerprogrammprodukt gerichtet. Dieses umfasst Programmcode für die Steuerung von einem oder mehreren Prozessoren eines Getränke-Zubereitungsmoduls und/oder eines Selbstbedienungs-Getränkeautomaten, wobei das Computerprogrammprodukt folgende Schritte steuert: Empfang von Getränke-Zubereitungsparameter, welche über eine Kommunikationsschnittstelle an eine Steuereinheit übermittelt werden, Steuern einer Zubereitungseinrichtung und an einem Wasseranschluss bereitgestellten Wasser zur Zubereitung eines Getränks, und erforderlichenfalls Steuern von Zusatzmodulen zur Durchführung von zusätzlichen Zubereitungsschritten. Mit einem solchen Computerprogrammprodukt kann die Zubereitung eines Getränks flexibel für eine grosse Vielzahl unterschiedlicher Getränke flexibel gesteuert werden.

Vorzugsweise umfasst das Computerprogrammprodukt ferner Programmcode für ein Abrechnungssoftwaremodul, insbesondere zur Kommunikation über eine Abrechnungs-Schnittstelle mit einem Zahlungssystem. Die Abrechnung wird insbesondere gemäss dem MDB Standard durchgeführt und die Bezahlung der zubereiteten Getränke wird somit durch ein weit verbreitetes, zuverlässiges Bezahlungssystem gewährleistet.

Vorzugsweise umfasst das Computerprogrammprodukt ferner Programmcode für ein Datenbanksoftwaremodul, insbesondere zum Abspeichern von Daten und Konfigurationen in einer Datenbank. Während dem Betrieb können relevante Daten schnell abgespeichert werden und effizient wieder darauf zugegriffen werden.

Vorzugsweise umfasst das Computerprogrammprodukt ferner Programmcode für ein Protokollmodul, insbesondere für das Auslösen der Zubereitung eines Getränks aufgrund eines zwischen dem Getränke-Zubereitungsmodul und einem Bedienteil aufgrund eines definierten Protokolls. Durch das definierte Protokoll wird insbesondere eine robuste Kommunikation zwischen den Komponenten des Selbstbedienungs-Getränkeautomaten ermöglicht. Zusätzlich Komponenten, welche das Protokoll erfüllen, können rasch und zuverlässig eingebunden werden. Das Protokoll ist nicht abhängig von der vewendeten Technologie, wie z.B. der Kommunikationskanäle wie Ethernet, RS232, etc., der verwendeten Hardware wie Personal Computer, Touchpad, etc. resp. der eingesetzten Betriebssysteme wie Windows, Linux etc.

Vorzugsweise umfasst das Computerprogrammprodukt ferner Programmcode für ein Telemetriesoftwaremodul, insbesondere zur Überwachung und Abrechnung der Zubereitung von Getränken mit einer Computerzentrale zur Überwachung von Selbstbedienungs-Getränkeautomaten. Durch die Kommunikation des Getränke-Zubereitungsmoduls und/oder des Selbstbedienungs-Getränkeautomaten mit einer Computerzentrale zur Überwachung von Selbstbedienungs-Getränkeautomaten wird insbesondere eine effiziente Wartung ermöglicht. So kann bei Fehlfunktionen sehr rasch das erforderliche Bedien- oder Servicepersonal aufgeboten werden, oder versucht werden, den Fehler aus der Computerzentrale zu beheben.

Vorzugsweise umfasst das Computerprogrammprodukt ferner Programmcode für ein Erweiterungssoftwaremodul, insbesondere um dem Getränke-Zubereitungsmodul und/oder dem Selbstbedienungs-Getränkeautomaten von externen Erweiterungsmodulen zusätzliche Funktionalitäten zur Verfügung zu stellen. Die Nutzung von externen Hard- und/oder Softwaremodulen für die Zubereitung von Getränken ermöglicht insbesondere eine zusätzliche Erhöhung der Leistungsfähigkeit und Zuverlässigkeit.

Vorzugsweise umfasst das Computerprogrammprodukt ferner Programmcode für ein Prüfsoftwaremodul, insbesondere zur Erfassung eines RFID-Codes oder eines Matrix-Codes. So können die Zutatenbehälter einen RFID-Code oder Matrix-Code aufweisen, welcher überprüft wird und wodurch feststellbar ist, ob ein passender oder korrekter Zutatenbehälter eingesetzt ist. Falls ein falscher Zutatenbehälter eingesetzt ist, beispielsweise ein Zutatenbehälter welcher vom Betreiber eines Selbstbedienungs-Getränkeautomaten nicht freigegeben ist, dann kann eine Sperrung von Getränke erfolgen, welche auf der betreffenden Zutat basieren. Um zu überprüfen, ob überhaupt ein bestimmtes Zusatzmodul vorhanden ist, ist das Prüfsoftwaremodul insbesondere eingerichtet, eine Motorenstrommessung durchzuführen. Falls kein Motorenstrom messbar ist, kann daraus geschlossen werden, dass das betreffende Zutatenmodul nicht eingesetzt ist. Alternativ kann ein RFID-Code und/oder Matrix-Code basiertes Lesesystem vorgesehen sein, welches mit dem Prüfsoftwaremodul zusammenwirkt, und womit geprüft wird, ob eine bestimmtes Zusatzmodul vorhanden ist oder ob stattdessen ein ähnliches Zusatzmodul verfügbar ist.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch ein Getränke-Zubereitungsmodul, welches für den Einbau in einen Selbstbedienungs-Getränkeautomaten eingerichtet ist;
- Fig. 2: schematisch ein Milchmodul, welches für den Anschluss an das Getränke-Zubereitungsmodul eingerichtet ist;
- Fig. 3: schematisch ein Pulvermodul, welches für den Anschluss an das Getränke-Zubereitungsmodul eingerichtet ist;
- Fig. 4: schematisch ein Sirupmodul, welches für den Anschluss an das Getränke-Zubereitungsmodul eingerichtet ist;
- Fig. 5: schematisch einen geschlossenen Selbstbedienungs-Getränkeautomaten; und
- Fig. 6: schematisch einen geöffneten Selbstbedienungs-Getränkeautomaten.

### WEG(E) ZUR AUSFÜHRUNG DER ERFINDUNG

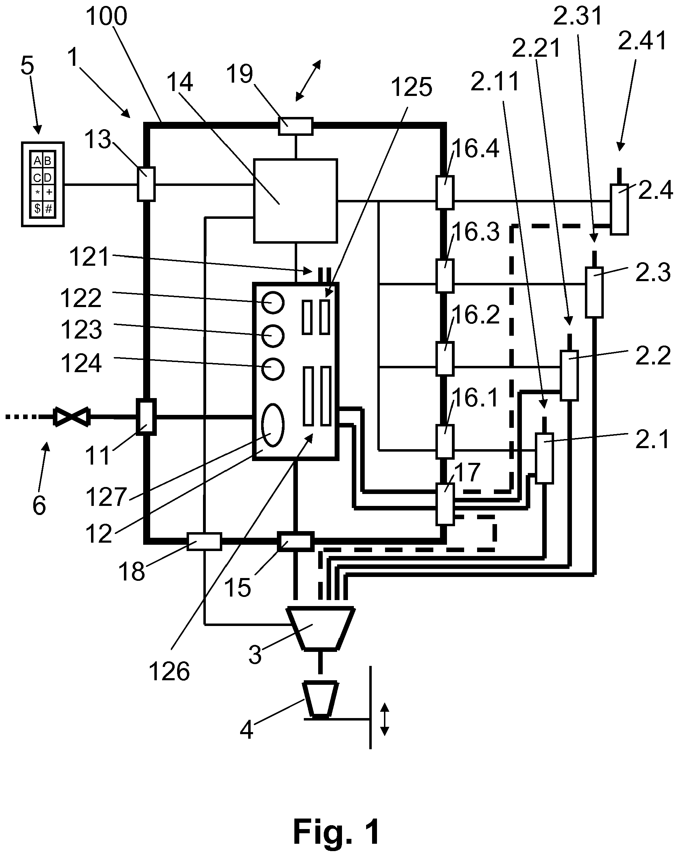

Figur 1 zeigt schematisch eine Ausführungsform eines Getränke-Zubereitungsmoduls 1, welches für den Einbau in einen Selbstbedienungs-Getränkeautomaten vorgesehen ist. Das Getränke-Zubereitungsmodul 1 umfasst einen Wasseranschluss 11 und eine Zubereitungseinrichtung 12 zur Zubereitung eines Getränks mit am Wasseranschluss 11 bereitgestelltem Wasser. Die Bereitstellung von Wasser erfolgt beispielsweise über ein am Wasseranschluss 11 angeschlossenes Leitungsnetz, einen daran angeschlossenen Wasserbehälter oder in einer anderen Weise. Die Getränke-Zubereitungseinrichtung 12 umfasst Einrichtungen, um Getränke wie beispielsweise Kaffee, Tee, heisse Schokolade, Instantsuppe, etc. zuzubereiten. In einer Ausführungsform umfasst die Zubereitungseinrichtung 12 einen Kaffeeautomaten zur Zubereitung eines qualitativ hochstehenden Kaffees. Der Kaffeeautomat umfasst beispielsweise eine oder mehrere Kaffeebrüheinheiten 126, welche Brühkammern aufweisen, die motorisch geöffnet und geschlossen werden. Besonders bevorzugt sind Brüheinheiten, wie sie beispielsweise aus der EP 2036466 oder der EP 2 030 538 derselben Anmeldering oder der EP 0 528 758 bekannt sind. Bezüglich des Aufbaus und der Funktionsweise einer solchen Brüheinheit wird integral auf die vorstehenden Anmeldungen verwiesen. Deren Zuverlässigkeit und Wartungsfreundlichkeit sind im Zusammenhang mit den vorliegenden Anforderungen besonders vorteilhaft. Die eine oder die mehreren Kaffeebrüheinheiten sind eingerichtet, um nach dem Füllen der Brühkammern mit einem frisch zubereiteten Kaffeepulver und unter Zuleitung von Heisswasser ein qualitativ hochstehendes Kaffeegetränk zuzubereiten und das Kaffeegetränk bei oder nach der Zubereitung abzugeben. Im Falle von mehreren Kaffeebrüheinheiten 126 können die abgegebenen Kaffeegetränke je einzeln weiter verarbeitet werden oder vor der Weiterverarbeitung zuerst gemischt werden. Weiter umfasst der Kaffeeautomat eine oder mehrere Kaffeemühlen 125, welchen aus einem oder mehreren Bohnenbehälter 121 Kaffeebohnen zuführbar sind. Insbesondere sind mehrere Bohnenbehälter 121 für unterschiedliche Kaffeebohnenqualitäten vorgesehen, beispielweise eine Kaffeebohnenqualität für die Zubereitung eines Espresso, eine andere Kaffeebohnenqualität für die Zubereitung eines Lungo, usw. Der Kaffeeautomat weist beispielsweise einen Kaffeeboiler 122 und eine Wasserpumpe 127 auf, wobei im Kaffeeboiler 122 heisses Wasser insbesondere bei einem Druck von z.B. bis zu 8bar und einer Temperatur von über 100°C zur Verfügung gestellt wird. Der Kaffeeautomat weist in einer Ausführungsform einen Heisswasserboiler 123 auf, in welchem heisses Wasser zur Verfügung gestellt wird, sowie ggf. einen Dampfboiler 124 zur Erzeugung von heissem Dampf. Die eine oder die mehreren Kaffeebrüheinheiten sind eingerichtet, nach der Zubereitung eines Kaffeegetränks den Kaffeekuchen aus den Brühkammern auszustossen. Das Getränke-Zubereitungsmodul weist einen Satzdurchwurf auf, um die Kaffeekuchen in einen Satzbehälter abzugeben.

Die Zubereitungseinrichtung 12, weist mindestens eine Zubereitungsschnittstelle auf, welche eingerichtet ist für den Anschluss von elektrischen Steuersignalen zur Steuerung der Zubereitung eines Getränks. In einer Ausführungsvariante ist die Zubereitungsschnittstelle eingerichtet Steuersignale zu empfangen für die Zubereitung von Kaffeegetränken, also z.B. Steuersignale für das Mahlen von in einem Kaffeebehälter angeordneten Kaffeebohnen mit einer Kaffeemühle, das Öffnen der Brühkammer der Brüheinheit, das Einfüllen einer Portion gemahlenen Kaffees in die Brühkammer der Brüheinheit, das Schliessen der Brühkammer der Brüheinheit, dem Zuführen von heissem Wasser aus dem Kaffeeboiler und dem Auswerfen des Kaffeekuchens aus der Brühkammer nach der Zubereitung des Kaffees.

Das Getränke-Zubereitungsmodul 1 umfasst mindestens eine Kommunikationsschnittstelle 13 und eine Steuereinrichtung 14, an welche über die Kommunikationsschnittstelle 13 Getränke-Zubereitungsparameter übermittelbar sind. Die Steuereinrichtung 14 ist eingerichtet, die Zubereitungseinrichtung 12 über die oben beschriebene Zubereitungsschnittstelle zu steuern, sodass aufgrund der Getränke-Zubereitungsparameter ein Getränk zubereitet wird. Die für die Steuerung der Zubereitungseinrichtung 12 erforderlichen Steuersignale werden also von der Steuereinrichtung 14 entsprechend der Getränke-Zubereitungsparameter erzeugt und an die Zubereitungseinrichtung 12 übertragen. In einer bevorzugten Ausführungsvariante umfasst die Steuereinrichtung 14 eine Regeleinrichtung, um statt nur eine Steuerung zusätzlich eine Regelung bei der Zubereitung des Getränks durchzuführen, d.h. es werden über Sensoren Zubereitungsparameter wie Temperatur, Druck, Zutatenmengen erfasst, wobei die gemessenen Zubereitungsparameter ausgewertet werden und entsprechend angepasste Steuersignale erzeugt werden. So wird beispielsweise über eine Heizungseinrichtung die Temperatur eines Kaffeeboilers 122 geregelt, eine Rotationsgeschwindigkeit einer Wasserpumpe 127 geregelt oder eine in eine Brüheinheit 126 gefüllte Menge von Kaffeepulver eingestellt. Ebenso kann, bei Vorhandensein von Milch-/Cappuccinoeinheiten die Dampf- und/oder Milchzufuhr mittels der Steuereinrichtung 14 geregelt werden.

Das Getränke-Zubereitungsmodul 1 ist in einer Ausführungsvariante in einem Modulgehäuse 100 angeordnet, insbesondere in einem stabilen und wertigen Modulgehäuse 100 beispielsweise aus Aluminium oder aus einem anderen Material. Das Modulgehäuse 100 kann insbesondere von vorne geöffnet wer. In einer Ausführungsvariante weist das Modulgehäuse 100 einen Einwurf für Reinigungstabletten auf. Das Modulgehäuse 100 weist ferner in einer Ausführungsform einen Satzdurchwurf auf, um die nach der Zubereitung von Kaffeegetränken anfallenden Kaffeekuchen in einen beispielsweise unterhalb des Getränke-Zubereitungsmoduls 1 angeordneten Abfallbehälter auszuwerfen. Der Satzdurchwurf kann gegen unbeabsichtigtes Eingreifen mit einer Hand gesichert sein, beispielsweise mechanisch, elektrisch, oder in einer anderen Weise. Der Satzdurchwurf besitzt ein hinreichendes Gefälle, um den Kaffeekuchen ohne zusätzliche mechanische Unterstützung in den Abfallbehälter einzubringen. Um diese Entsorgung weiter zu unterstützen, kann in einer Ausführungsvariante der Satzdurchwurf eine Innenbeschichtung, wie eine Chrombeschichtung, aufweisen, welche eine unerwünschte Verkeimung dieser Komponente vermeidet. Es kann zusätzlich eine Reinigungseinrichtung vorgesehen sein, mit welcher der Satzdurchwurf bei Bedarf oder nach einem Zeitintervall gereinigt werden kann. In einer Ausführungsvariante umfasst die Reinigungseinrichtung mechanische Einrichtungen, wie einen Schaber oder einen Reinigungswischer, mit welchen die Oberflächen des Satzdurchwurfs mechanisch gereinigt werden. In einer weiteren Ausführungsvariante umfasst die Reinigungseinrichtung eine Abgabevorrichtung für flüssige oder pulverförmige Reinigungsmittel. Die Reinigungsvorrichtung kann ferner Düsen oder Auslässe aufweisen, um eine wasser- oder dampfbasierte Spülung oder Reinigung durchzuführen.

Beim Betrieb des Getränke-Zubereitungsmoduls 1 sind Wartungsaufgaben durchzuführen. An dieser Stelle sei erwähnt, dass sich der Begriff Servicepersonal auf Personen bezieht, welche komplexere, fachkundige Handlungen durchführen, wie beispielsweise das Reparieren, das Justieren oder das Austauschen komplexer Baugruppen. Demgegenüber bezieht sich der Begriff Bedienpersonal auf Personen, welche einfachere, routinemässige Handlungen durchführen, wie beispielsweise das Nachfüllen von Zutaten, das Austauschen von Zutatenbehälter oder einfache Reinigungsarbeiten.

In einer Ausführungsform ist das Modulgehäuse 100 des Getränke-Zubereitungsmoduls 1 nur mit einem Spezialwerkzeug oder nach Entsperren einer Code-Sicherung zu öffnen, beispielsweise durch das Servicepersonal, wobei durch das Spezialwerkzeug bzw. die Code-Sicherung sichergestellt wird, dass beispielsweise das Bedienpersonal das Modulgehäuse 100 nicht oder nur teilweise öffnen kann. Das Modulgehäuse 100 kann abgedichtet ausgeführt sein, beispielsweise um Überlauftests zu erfüllen. Zur Aufteilung des Innenraums des Modulgehäuses 100 können Zwischenwände vorgesehen sein, insbesondere damit wasserführende Teile, Brühraum und elektrische sowie elektronische Einrichtungen voneinander abgetrennt sind. Ferner sind insbesondere Bohnenbehälter und Kaffeemühlen vom Kaffeeboiler thermisch getrennt. Zur Reinigung des Brühraums der Brüheinrichtung oder zum Auswechseln der Brüheinrichtung kann ein Zugang vorgesehen sein, welcher ohne weitere Werkzeuge durch das Bedienpersonal zugänglich ist, wobei über einen Sicherheitsschalter eine Überwachung und eine Abschaltung insbesondere von elektrischen Einrichtungen beim Gebrauch des Zugangs erfolgt.

In einer Ausführungsvariante weist das Getränke-Zubereitungsmodul 1 ein Bedienteil auf. Das Bedienteil ist beispielsweise am Modulgehäuse 100 angebracht und insbesondere eingerichtet, um Einstellungen an der Steuereinheit 14 vorzunehmen und aktuelle oder gespeicherte Einstellungen anzuzeigen. Die Einstellungen können beispielsweise die bei der Zubereitung von Getränken erforderlichen Parameter wie Brühtemperatur, Brühzeit, Brühdruck, etc. betreffen. Das Bedienteil kann eingerichtet sein, um aktuelle Einstellungen oder Daten insbesondere der Steuereinheit 14 oder irgendeiner anderen Einrichtung des Getränke-Zubereitungsmoduls 1 anzuzeigen, wie beispielsweise eine Anzahl zubereiteter Getränke ggf. aufgeschlüsselt nach Getränkeart, Füllstandinformationen, Reinigungsinformationen, Reparaturinformationen, etc. So kann das Bedienteil ein Display aufweisen, beispielweise einen 4.3 inch Display, einen 5.7 inch Display oder ein Display einer anderen Grösse. Das Display ist in einer Ausführungsvariante als Touchscreen ausgeführt, beispielsweise als resistives oder kapazitives Touchscreen Display. In einer Ausführungsform ist die Steuereinheit 14 im Bedienteil enthalten.

In einer weiteren Ausführungsvariante weisen die Steuereinheit 14, das Bedienteil oder eine andere Komponente des Getränke-Zubereitungsmoduls 1 einen oder mehrere Computer-Prozessoren auf, welche eingerichtet sind, ein Betriebssystem wie insbesondere WinCE ablaufen zu lassen. Die in dem vorliegenden Dokument beschriebenen funktionalen Module sind insbesondere als programmierte Softwaremodule ausgeführt, welche einen oder mehrere Prozessoren und daran angeschlossenen Peripherieeinheiten steuern, um Funktionen wie beispielsweise Steuerfunktionen, Anzeigefunktionen, Einstellfunktionen, Datenübertragungsfunktionen etc. auszuführen. Die programmierten Softwaremodule sind auf einem computerlesbaren Medium gespeichert, welches mit dem einen oder den mehreren Prozessoren verbindbar ist, so dass die programmierten Softwaremodule auf dem einen oder den mehreren Prozessoren ablauffähig sind. Der Fachmann wird jedoch verstehen, dass die funktionalen Module teilweise oder ganz in Hardware bzw. als sog. Embedded Systems ausgeführt sein können.

Das Getränke-Zubereitungsmodul 1 weist in einer Ausführungsform einen Leistungsteil mit verschiedenen I/O Schnittstellen und einer aus Kaffeeautomaten bekannten Architektur auf. In einer weiteren Ausführungsvariante ist eine Stromversorgung vorgesehen, welche an irgendeine ein- oder mehrphasige Stromversorgung anschliessbar ist, beispielsweise an ein 230V oder 120V Stromnetz, und eine Versorgungsspannung von insbesondere 24V oder 30V zur Verfügung stellt. Für das Schalten von Leistungsverbraucher sind insbesondere SSR (Solid State Relais) vorgesehen, wobei vorzugsweise mehrere Kanäle schaltbar sind, so z.B. 4 Heizkanäle für Boiler und 1 Kanal für eine Pumpe. Es ist in einer weiteren Ausführungsvariante eine Wasserpumpe 127, insbesondere eine Rotationspumpe, angebracht, mit welcher das am Wasseranschluss verfügbare Wasser gefördert werden kann, insbesondere in einen Kaffeeboiler 122, einen Heisswasserboiler 123 und/oder einen Dampfboiler 124. Diese Boiler haben in einer Ausführungsform eine Leistung von 2kW, 3kW oder 6kW und weisen ein Volumen von z.B. 0.8l-1.2l auf. Im Kaffeeboiler 122 kann das Wasser beispielsweise unter einem Druck von bis zu 8bar geheizt werden, wobei die Wasserpumpe 127 entsprechend eingerichtet ist, einen solchen Druck zu erzeugen. Vorzugsweise weist der Kaffeeboiler 122 ein Überdruckventil auf, welches bei einem Druck von z.B. 12bar aktiviert wird, um eine weitere Druckerhöhung zu vermeiden. Die Boiler können eingerichtet sein, damit diese für Servicezwecke rasch austauschbar sind. Zur Steuerung des Wasserflusses sind vorzugsweise verschiedene Ventile vorgesehen, welche verkettet oder einzeln angebracht sind. Das Fluidsystem, also z.B. zwischen dem Wasseranschluss 11, der Wasserpumpe 127 und den Boiler 122, 123, 124, ist vorzugsweise mit Schnellverbinder und Steckventilen aufgebaut. Sicherheitsventile sind einfach austauschbar angeordnet. In einer Ausführungsvariante ist ein Hauptventil vorgesehen, wobei der Wasserfluss sowie die Ventilstellungen durch Sensoren überwacht und von einer Überwachungseinrichtung ausgewertet wird. Die Überwachungseinrichtung umfasst beispielsweise ein programmiertes Softwaremodul und ist eingerichtet, bei Unstimmigkeiten im Wasserfluss das Hauptventil abzuschalten. Eine solche Unstimmigkeit kann bestehen, falls Wasser fliest ohne dass ein entsprechendes Ventil geöffnet ist. Der Wasserfluss wird in einer Ausführungsform mit einem oder mehreren Flowmeter überwacht, welche insbesondere ein Wasserrad und einen Hall-Sensor enthält. Insbesondere wird das gesamte Fluidsystem mit mehreren Flowmeter überwacht.

Zur Herstellung von frisch gemahlenem Kaffeepulver weist das Getränke-Zubereitungsmodul 1 in einer Ausführungsform eine oder mehrere Kaffeemühlen 125 auf, welche je mit einem Bohnenbehälter 121 verbindbar sind. Der Füllstand der Bohnenbehälter wird in einer Ausführungsform optisch oder elektrisch überwacht, wobei bei einer elektrischen Überwachung insbesondere die Stromaufnahme der Kaffeemühlen 125 beim Mahlen von frischem Kaffeepulver herangezogen wird. Die optische Überwachung ist bevorzugt, da damit feststellbar ist, ob der Füllstand der Kaffeebehälter ausreichend ist, um noch eine oder mehrere vollständige Portionen frische gemahlenes Kaffeepulver herzustellen. Dagegen kann bei der Überwachung der elektrischen Stromaufnahme nur festgestellt werden, dass zu einem bestimmten Zeitpunkt das Kaffeepulver aufgebraucht ist. Somit ist bei der elektrischen Überwachung nicht gewährleistet, dass noch eine vollständige Portion frisch gemahlenen Kaffeepulvers hergestellt werden kann. Für eine Anwendung in einem Automaten ist dies ungünstig, da der vollständige Bezug eines Getränks nicht gewährleistet ist. Bei handbedienten Geräten stört dies weniger, da das Bedienpersonal nach dem Füllen der Kaffeebohnen einfach ein neues Getränk zubereiten kann. Die Bohnenbehälter sind am Getränke-Zubereitungsmodul 1 vorzugsweise von aussen zugänglich angeordnet und leicht zu demontieren resp. Auszutauschen, insbesondere durch das Bedienpersonal. Die Bohnenbehälter weisen vorzugsweise ein Volumen für mindestens 2kg Kaffeebohnen auf und sind insbesondere passiv belüftet, um die Qualität der darin gelagerten Kaffeebohnen nicht zu beeinträchtigen. Die Kaffeebehälter können in einer Ausführungsvariante durchsichtig ausgeführt sein, so dass die Bohnen von aussen einsehbar sind, um die hohe Qualität des zubereiteten Getränks zu unterstreichen.

Das Getränke-Zubereitungsmodul 1 weist in einer Ausführungsvariante einen Kaffeebrüher auf, welcher beispielsweise einen Brühkopf mit einem Volumen für 14g, für 20g, oder für 30g frisches Kaffeepulver aufweist. In einer alternativen Ausführungsform ist der Brühkopf für kleinere oder grössere Volumen eingerichtet. Der Kaffeebrüher kann insbesondere als Kunststoffkaffeebrüher und ohne Werkzeuge leicht austauschbar ausgeführt sein.

In einer Ausführungsform weist das Getränke-Zubereitungsmodul 1 eine oder mehrere Schnittstellen für die Datenübertragung auf, wie z.B. eine Ethernet Schnittstelle, eine MDB Schnittstelle (Multidrop Bus) oder eine USB Schnittstelle (Universal Serial Bus). In einer Ausführungsform ist via Ethernet ein abgesetztes GUI anschliessbar (Graphical User Interface), wobei je nach Architektur beispielsweise über eine Socket Verbindung direkt der Zugriff auf eine Control Applikation beispielsweise der Steuereinrichtung 14 ermöglicht ist. Die USB Schnittstelle ermöglicht beispielsweise eine Anbindung von drahtlosen Kommunikationsmodulen wie IrdA (Infrared Data Association), WLAN (Wireless Local Area Network), GSM/UMTS (Global System for Mobile Communication/Universal Mobile Telecommunications System), Bluetooth oder eines anderen drahtlosen Kommunikationsmoduls. Die Schnittstellen für die Datenübertragung können ferner auf einem RS-485 Standard basieren.

Am Getränke-Zubereitungsmodul 1 sind in einer Ausführungsform Alarmschnittstellen, Statusschnittstellen, Netzzuleitungsschnittstellen und/oder Versorgungsspannungsschnittstellen vorgesehen. Über Alarmschnittstellen kann der Status in einer lokalen Umgebung optisch und/oder akustisch erkennbar gemacht werden, beispielsweise mit Sirenen, mit Blinklampen, auf einem Display z.B. einer Kasse eines einem Selbstbedienungs-Getränkeautomaten zugeordneten Verkaufslokals oder in einer anderen Weise. Über Statusschnittstellen kann beispielsweise die Anwesenheit oder der Füllstand eines Satzbehälters überwacht werden. Über Versorgungsspannungsschnittstellen kann länderspezifisch eine Stromversorgung wie z.B. eine einphasige oder dreiphasige Stromversorgung gewährleistet werden.

In einer weiteren Ausführungsvariante weist das Getränke-Zubereitungsmodul 1 eine oder mehrere Fluidschnittstellen auf, insbesondere einen Getränkeauslauf 15 und eine Zusatzfluidschnittstelle 17 für einen Heisswasseranschluss, einen Dampfanschluss und einen Spülwasseranschluss, welche beispielsweise für eine Verbindung mit einem oder mehreren Mikhmodulen 2.1, mit einem oder mehreren Pulvermodulen 2.2, mit einem oder mehreren Reinigungsmodulen 2.4 sowie für ein Auslaufmodul 3 vorgesehen sind.

In Figur 1 ist schematisch ein Getränkeauslauf 15 dargestellt, welcher eingerichtet ist, um das vom Getränke-Zubereitungsmodul 1 zubereiteten Getränk für die weitere Verwendung abzugeben.

In Figur 1 sind schematisch Zusatzmodulschnittstellen 16.1, 16.2, 16.3, 16.4 dargestellt. Die Zusatzmodulschnittstellen können insbesondere eingerichtet sein, um eine Datenkommunikation zwischen der Steuereinheit 14 und Zusatzmodulen wie insbesondere einem oder mehreren Milchmodulen 2.1, einem oder mehreren Pulvermodulen 2.2, einem oder mehreren Sirupmodulen und einem oder mehreren Reinigungsmodulen 2.4 zu gewährleisten. Wie in Figur 1 schematisch dargestellt, weisen das Milchmodul 2.1, das Pulvermodul 2.2, das Sirupmodul 2.3 und das Reinigungsmodul 2.4 entsprechende Zutatenbehälter 2.11, 2.21, 2.31, 2.41 auf. Die Zusatzmodulschnittstellen 16.1, 16.2, 16.3, 16.4 weisen insbesondere Stromversorgungsschnittstellen auf für die Stromversorgung der Zusatzmodule. Die Stromversorgung ist in einer Ausführungsform durch eine im Getränke-Zubereitungsmodul 1 angeordnete Stromversorgung gewährleistet.

In Figur 1 sind schematisch Zusatzfluidschnittstellen 17 dargestellt, welche eingerichtet sind, um zwischen der Zubereitungseinrichtung 12 und einem oder mehreren Zusatzmodulen, also insbesondere dem Milchmodul 2.1, dem Pulvermodul 2.2 und dem Reinigungsmodul 2.4 eine Fluidverbindung bereitzustellen. Es kann über die Zusatzfluidschnittstelien 17 Wasser, Heisswasser, Dampf oder Reinigungsflüssigkeit zwischen dem Getränke-Zubereitungsmodul 1 und den Zusatzmodulen ausgetauscht werden.

In Figur 1 ist ein Selbstbedienungsbedienteil 5 dargestellt, welche wie erwähnt als Bedienteil des Getränke-Zubereitungsmoduls 1, als GUI, als Tabletcomputer mit einem Touchscreen oder in einer anderen Art ausgeführt ist. Über das Selbstbedienungsbedienteil 5 können insbesondere Getränke-Zubereitungsparamter festgelegt werden und die Zubereitung eines Getränks ausgelöst werden. Das Selbstbedienungsbedienteil 5 kann ferner ein Bezahlsystem umfassen, welches auf Geldstücken, auf Karten oder auf anderen Bezahlmittel basiert. Wie in Figur 1 dargestellt, ist das Selbstbedienungsbedienteil 5 an der Kommunikationsschnittstelle 13 angeschlossen. Als Bezahlsystem kann in bevorzugten Ausführungsformen auch eine Lösung mittels Smartphone oder einem anderen portablen Benutzer-Device eingesetzt werden, wobei die Bezahlung über eine Zentrale oder im Falle beispielsweise eines Prepaid-Systems lokal abgewickelt wird.

In Figur 1 ist eine Wasserzuführung 6 dargestellt, welche beispielsweise auf einem Wasserleitungsnetz, auf einem Wasserbehälter oder auf einer anderen Wasserzuführung basiert. Die Wasserzuführung 6 ist am Wasseranschluss 11 angeschlossen, wodurch dem Getränke-Zubereitungsmodul 1 Wasser in gewünschten Mengen zur Verfügung gestellt wird.

In Figur 1 ist ein Auslaufmodul 3 dargestellt, welches verschieden Fluidströme sammelt, wie beispielsweise ein zubereitetes Getränk aus dem Getränkeauslauf 15, sowie Zusätze oder Getränke, welche von einem Milchmodul 2.1, von einem Pulvermodul 2.2, von einem Sirupmodul 2.3, von einem Reinigungsmodul 2.4, oder von einem anderen Modul abgegeben wird. Das Auslaufmodul 3 ist eingerichtet, diese Getränke und/oder Zusätze zu sammeln und in einen Becher 4 abzugeben. Wie in Figur 1 schematisch dargestellt, kann das Auslaufmodul 3 feststehend angeordnet sein und der Becher 4 auf einem Halter vertikal verschiebbar angeordnet sein, so dass der Abstand zwischen dem Auslaufmodul 3 und dem Becher 4 bei der Getränkezubereitung und bei der Entnahme des Bechers 4 bedarfsgerecht einstellbar ist. Wie aus Figur 1 ersichtlich ist, weist das Getränke-Zubereitungsmodul 1 in einer Ausführungsvariante eine Auslaufmodulschnittstelle 18 auf, über welche insbesondere eine Steuerverbindung zwischen der Steuereinheit 14 und dem Auslaufmodul 3 erstellbar ist.

In einer weiteren Ausführungsvariante weist das Getränke-Zubereitungsmodul 1 eine Überwachungsschnittstelle 19 auf, über welche insbesondere eine Datenverbindung zu entfernten (remote) Überwachungsgeräten wie beispielsweise einem Personal Computer, einem Überwachungsserver oder einem anderen Überwachungsgerät ermöglicht ist.

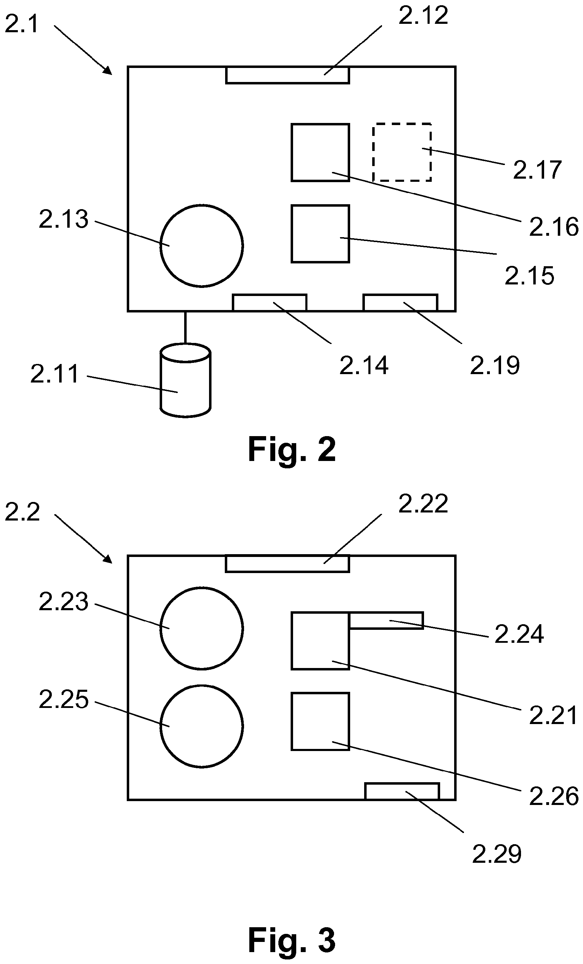

Figur 2 zeigt eine Ausführungsform eines Milchmoduls 2.1, welches für den Anschluss an das Getränke-Zubereitungsmodul 1 vorgesehen ist. Die wesentlichsten Zutaten des Milchmoduls 2.1, d.h. die frische Milch, werden in einem Milchbehälter 2.11 zur Verfügung gestellt, welcher in einer Ausführungsform vom Milchmodul 2.1 getrennt angeordnet ist. Das Milchmodul 2.1 weist insbesondere eine oder mehrere der folgenden Komponenten auf: eine Milchmodulschnittstelle 2.12 für den Anschluss an das Getränke-Zubereitungsmodul 1, eine Milchpumpe 2.13 für die Förderung von Milch aus dem Milchbehälter 2.11, eine Milchfüllstandsüberwachung 2.14 für die Überwachung des Füllstands des Milchbehälters 2.11, ein Quetschventil 2.15, eine Luftpumpe 2.16, ein Spülventil 2.17. Die Milchpumpe 2.13 ist insbesondere leicht zugänglich angeordnet. Das Quetschventil 2.15 dient insbesondere zum Umschalten zwischen dem Pumpen von Milch und dem Spülen des Milchmoduls 2.1. Die Luftpumpe 2.16 ermöglicht insbesondere die Erzeugung von kaltem Milchschaum, wobei Luft in die Milch eingebracht wird und über Düsen im Milchpfad der Milchschaum erzeugt wird. Das Spülventil 2.17 kann beispielsweise mehrfach ausgeführt sein, wobei auf Seite des Getränke-Zubereitungsmoduls nur ein Heisswasseranschluss erforderlich ist. Die Milchfüllstandsüberwachung 2.14 kann insbesondere mit einem Ultraschallsensor oder mit einem am Milchbehälter 2.11 angebrachten induktiven Sensor erfolgen. Die Milchmodulschnittstelle 2.12 ist insbesondere eingerichtet zur Übertragung von Steuersignalen, für die Übertragung von elektrischer Energie zur Energieversorgung und/oder für die Übertragung von Fluiden wie Wasser, Heisswasser, Dampf oder Reinigungsmittel zwischen dem Getränke-Zubereitungsmodul 1 und dem Milchmodul 2.1. Das Milchmodul 2.1 weist schliesslich einen Milchauslauf 2.19 auf, zur Weiterleitung von zubereiteter Milch an das Auslaufmodul 3.

Figur 3 zeigt eine Ausführungsform eines Pulvermoduls 2.2, welches für den Anschluss an das Getränke-Zubereitungsmodul 1 vorgesehen ist. Die wesentlichsten Zutaten des Pulvermoduls 2.2, also insbesondere ein Pulver für die Zubereitung eines bestimmten Getränks, werden in einem Pulverbehälter 2.21 zur Verfügung gestellt, welcher in einer Ausführungsform im Pulvermodul 2.2 angeordnet ist. Das Pulvermodul 2.2 weist insbesondere eine oder mehrere der folgenden Komponenten auf: eine Pulvermodulschnittstelle 2.22 für den Anschluss an das Getränke-Zubereitungsmodul 1, einen Fördereinrichtung 2.23 für die Förderung von Pulver aus einem Pulverbehälter 2.21, eine Pulverfüllstandsüberwachung 2.24 für die Überwachung des Füllstands des Pulverbehälters 2.21, eine Mixereinrichtung 2.25 für das Mischen von Pulver mit Wasser, ein Wasserventil 2.26. Die Fördereinrichtung 2.23 weist insbesondere einen Fördermotor und eine Förderschnecke auf, um eine bestimmte Menge Pulver in die Mixereinrichtung 2.25 zu fördern. Die Mixereinrichtung 2.25 weist einen Mixermotor und Mischeinrichtungen auf, wobei insbesondere gewährleistet ist, dass ein Überlauf der Mixereinrichtung kontrolliert abfliessen kann. Der Pulverbehälter 2.21 weist beispielsweise ein Volumen von 4l auf. Die Pulverfüllstandsüberwachung 2.24 kann auf Ultraschall basieren oder induktiv erfolgen. Der Pulvergetränkeauslauf 2.29 ist eingerichtet zur Weiterleitung des mit Pulver zubereiteten Getränks.

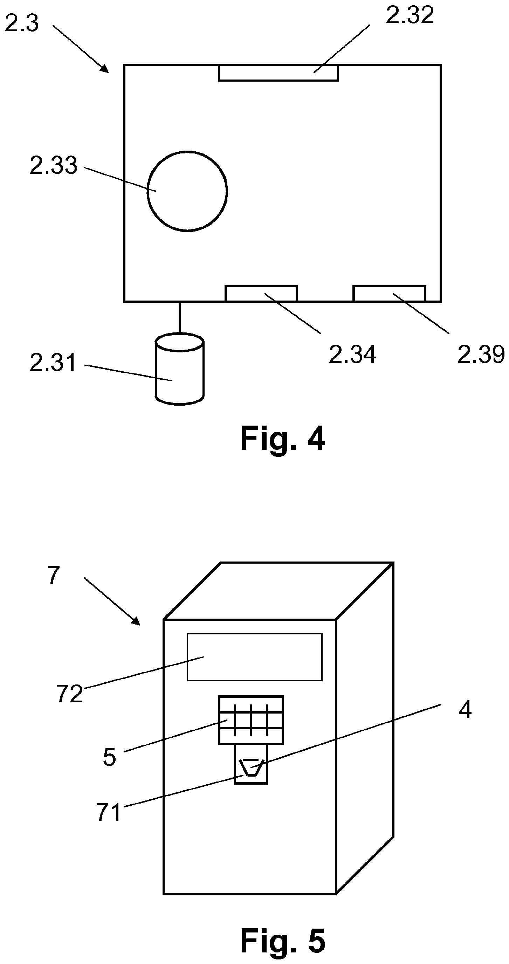

Figur 4 zeigt eine Ausführungsform eines Sirupmoduls 2.3, welches für den Anschluss an das Getränke-Zubereitungsmodul 1 vorgesehen ist. Die wesentlichsten Zutaten des Sirupmoduls 2.3, also insbesondere ein Sirup mit einem bestimmten Aroma, werden in einem Sirupbehälter 2.31 zur Verfügung gestellt, welcher in einer Ausführungsform vom Sirupmodul 2.3 getrennt angeordnet ist. Das Sirupmodul 2.3 weist insbesondere eine oder mehrere der folgenden Komponenten auf: eine Sirupmodulschnittstelle 2.32 für den Anschluss an das Getränke-Zubereitungsmodul 1, eine Siruppumpe 2.33 für die Förderung von Sirup aus dem Sirupbehälter 2.31, eine Sirupfüllstandsüberwachung 2.34 für die Überwachung des Füllstands des Sirupbehälters 2.31. Die Siruppumpe 2.33 ist insbesondere als Schlauchquetschpumpe ausgeführt. Die Sirupschnittstelle 2.32 ist in einer Ausführungsform so wie beispielsweise auch andere Zusatzmodulschnittstellen eingerichtet, um ein Signal wie z.B. ein PWM Signal (Pulse Width Modulation) zur Aktivierung der Siruppumpe 2.33 zu empfangen und um ein Signal betreffend den Füllstand des Sirupbehälters 2.31 zu senden. In einer Ausführungsvariante wird elektrische Energie für den Betrieb des Sirupmoduls 2.3 über die Sirupschnittstelle 2.32 übertragen. Die Sirupfüllstandsüberwachung 2.34 weist einen Sensor auf, welcher in einer Ausführungsform beim Sirupbehälter 2.31 angebracht ist. Das Sirupmodul 2.3 weist schliesslich einen Sirupauslauf 2.39 auf, zur Weiterleitung von Sirup an das Auslaufmodul 3.

In einer Ausführungsform weist das Getränke-Zubereitungsmodul 1 und erforderlichenfalls die Zusatzmodule 2.1, 2.2, 2.3, 2.4 redundante Baugruppen auf. Das Getränke-Zubereitungsmodul 1 weist in diesem Fall vorzugsweise mehrere Kaffeebrüheinheiten auf, wobei u.a. bei einer Fehlfunktion einer einzelnen Kaffeebrüheinheit gewährleistet ist, dass andere Kaffeebrüheinheiten die für die Getränkezubereitung erforderlichen Funktionen vollständig übernehmen können. Die Zusatzmodule 2.1, 2.2, 2.3, 2.4 können ebenfalls mehrere redundante Einheiten aufweisen. Gleichzeitig wird es dadurch ermöglicht, dass durch Parallelschaltung dieser redundanten Einheiten, insbesondere bei einem einzelnen Auslass von zwei Brüheinheiten, eine Leistungssteigerung und/oder kürzere Zubereitungszeiten erreicht werden können. Alternativ sind bei bevorzugten Ausführungsformen, ebenfalls zu entsprechender Verbesserung, mehrere Getränke-Zubereitungsmodule 1 und/oder mehrere Zusatzmodule 2.1, 2.2, 2.3, 2.4 des gleichen Typs vorgesehen, also mehrere Sirupmodule, Pulvermodule, Milchmodule, etc.

Insbesondere unter Verwendung der Überwachungsschnittstelle 19 ist es in einer Ausführungsform vorgesehen, Telemetriedaten zwischen dem Getränke-Zubereitungsmodul 1 und beispielsweise einer Zentraleinheit zu übermitteln, d.h. zu senden und zu empfangen. Die Telemetriedaten können insbesondere Füllstand, Funktionsfähigkeit oder Mengenangaben betreffend zubereiteter Getränke betreffen. Die Telemetriedaten können in der Zentraleinheit ausgewertet oder überwacht werden, so dass die Wartung des Getränke-Zubereitungsmoduls und der daran angeschlossenen Zusatzmodulen bedarfsgerecht erfolgen kann, d.h. sobald ein Behälter mit Zutaten leer ist oder ein Defekt festgestellt wird, kann Servicepersonal oder Bedienpersonal bedarfsgerecht aufgeboten werden. In einer weiteren Ausführungsform werden lokal beim Getränke-Zubereitungsmodul 1 optische und/oder akustische Alarmsignale erzeugt, wobei je nach Störung nur eine lokale Alarmierung erfolgt, nur eine Alarmierung über die Zentrale oder eine Kombination einer lokale Alarmierung und einer Alarmierung über die Zentrale. In einer Ausführungsvariante betreffen die Telemetriedaten Getränkerezepte, so dass neue Rezepte auf das Getränke-Zubereitungsmodul ladbar oder nicht mehr aktuelle Rezepte löschbar oder sperrbar sind. In einer weiteren Ausführungsvariante betreffen die Telemetriedaten Bedienungsdaten, um die Bedienung von einer Zentraleinheit zu ermöglichen oder zu unterstützen, beispielsweise für Ausbildungszwecke oder im Falle von Kunden mit Schwierigkeiten bei der Bedienung von Automaten, wie beispielsweise sehbehinderten Kunden. Die zur Bedienung erforderlichen Telemetriedaten können beispielsweise auf einem mobilen Gerät wie einem Smartphone erstellt werden, so dass über ein Mobilfunknetz die Bedienung ermöglicht ist, beispielsweise um gezielte Abfragen betreffend den Status des Getränke-Zubereitungsmoduls 1 durchzuführen, oder um die Herstellung eines Getränks auszulösen, nachdem eine im Mobilnetz enthaltene Bezahlzentrale die Abbuchung eines Geldbetrags bestätigt hat. Eine Abfrage das Status kann beispielsweise den Füllstand von Zutaten betreffen, so dass das Bedienpersonal, welches zwar in der Nähe aber nicht vor Ort des Getränke-Zubereitungsmoduls 1 ist entscheiden kann, ob es sich lohnt, gleich vor Ort des Getränke-Zubereitungsmoduls 1 zu fahren, um entsprechende Arbeiten zum Nachfüllen oder Reinigen durchzuführen, falls diese in absehbarer Zeit sowieso erforderlich werden würden.

Das Getränke-Zubereitungsmodul 1 ist vorzugsweise eingerichtet, um im Zusammenwirken mit einem Reinigungsmodul 2.4 bei Bedarf eine selbständige Reinigung durchzuführen. Dazu ist beispielsweise ein Reinigungssoftwaremodul vorgesehen, welches beispielsweise mit einem oder mehreren Sensoren zusammenwirkt, um aufgrund eines durch die Sensoren ermittelten Verschmutzungsgrads zu entscheiden, ob ein Reinigungsbedarf besteht. Ferner ist das Reinigungssoftwaremodul eingerichtet, um die Reinigung insbesondere nach Ablauf eines bestimmten Zeitintervalls oder nach Zubereitung einer bestimmten Anzahl Getränke durchzuführen. Falls das Reinigungssoftwaremodul eine Reinigung für erforderlich hält, werden insbesondere über die Kommunikationsschnittstelle 13 und/oder die Überwachungsschnittstelle 19 entsprechende Mitteilungen übermittelt, beispielsweise an den Selbstbedienungs-Getränkeautomat in welchem das Getränke-Zubereitungsmodul 1 eingebaut ist oder an eine Zentrale. Der Selbstbedienungs-Getränkeautomat ist beispielsweise eingerichtet, bei einer Reinigung erforderliche Massnahmen einzuschalten, beispielsweise ein Verschliessen eines Ausgabebereichs, damit keine Benutzer sich versehentlich verbrühen, oder ein Anzeigen auf einem Display, dass eine Gerätereinigung erfolgt. Das Verschliessen des Ausgabebereichs erfolgt vorzugsweise durch eine Falltüre oder durch ein Wegschwenken des Ausgabebereichs. In einer Ausführungsform aktiviert der Selbstbedienungs-Getränkeautomat einen oder mehrere Abfallbehälter, um gebrauchte Reinigungsflüssigkeit oder Reinigungsmittel aufzunehmen.

In einer Ausführungsvariante weist das Getränke-Zubereitungsmodul 1 ein Koordinationssoftwaremodul auf. Das Koordinationssoftwaremodul ist insbesondere eingerichtet, um insbesondere im Zusammenwirken mit Schnittstellen oder Sensoren Koordinationsdaten wie beispielsweise die Anzahl und der Typ von am Getränke-Zubereitungsmodul 1 angeschlossenen Zusatzmodulen, den Status einer Getränke-Zubereitungseinrichtung, den Füllstand von Zutaten, die Temperatur und der Druck von Heisswasserbehältern sowie andere Koordinationsdaten zu sammeln und auszuwerten. Die Auswertung erfolgt insbesondere derart, dass regelmässig festgestellt wird, welche Getränke in welchen Mengen noch hergestellt werden können. In einer Ausführungsform ist das Koordinationssoftwaremodul eingerichtet, um im Zusammenwirken mit der Kommunikationsschnittstelle 13 und/oder der Überwachungsschnittstelle 19 Auswertungsresultate zu übermitteln, so dass beispielsweise sich beispielsweise ein Bedienteil, welches an einem Getränkeautomaten angeschlossen ist in dem das Getränke-Zubereitungsmodul 1 eingebaut ist, automatisch an die momentan zur Verfügung stehende Getränkeauswahl anpassen kann. Falls beispielsweise ein Sirupbehälter leer ist, dann kann beispielsweise durch ein Softwaremodul des Bedienteils gewährleistet werden, dass die Auswahl von Getränken welche auf diesem Sirup basieren für den Benutzer gesperrt oder dem Benutzer gar nicht mehr angezeigt werden. Ferner kann über die Überwachungsschnittstelle eine Meldung zur Wartung abgesetzt werden, so dass der Sirupbehälter durch das Servicepersonal bedarfsgerecht ersetzt werden kann.

In einer weiteren Ausführungsform weist das Getränke-Zubereitungsmodul 1 eine Funktionstestsoftware auf. Die Funktionstestsoftware ist in einer Ausführungsform eingerichtet, um im Zusammenwirken mit einer Bediensoftware, welche in einem an einem Getränkeautomaten angebrachten Bedienteil ablauffähig ist, zu testen, welche Funktionen durch das Getränke-Zubereitungsmodul 1 und welche Funktionen durch die Software des Bedienteils zu erledigen ist. Das Bedienteil kann beispielsweise einen leistungsfähigen Linux oder Windows Computer umfassen. In diesem Fall kann mit der Funktionstestsoftware festgelegt werden, dass beispielsweise die Überwachung oder Steuerung des Getränke-Zubereitungsmoduls 1 vom Bedienteil her erfolgt, wobei beispielsweise sicherheitsrelevante Funktionen immer im Getränke-Zubereitungsmodul 1 belassen sind oder doppelt überprüft werden. In einem anderen Fall kann das Bedienteil nur einen einfachen Tastenblock aufweisen. In diesem Fall kann mit der Funktionstestsoftware festgelegt werden, dass beispielsweise alle Aufgaben wie Überwachung und Steuerung des Getränke-Softwaremoduls 1 vollständig durch im Getränke-Zubereitungsmodul 1 ablauffähige Softwaremodule erfolgt.

In einer nochmals weiteren Ausführungsform weist das Getränke-Zubereitungsmodul 1 eine Abrechnungs-Softwarekomponente wie z.B. eine MDB-Softwarekomponente auf, welche die Abrechnung von zubereiteten Getränken gewährleistet. Die Abrechnung kann in einer Ausführungsvariante im Zusammenwirken mit einem am Getränkeautomaten angebrachten Bezahlsystem erfolgen. In einer anderen Ausführungsvariante erfolgt die Abrechnung beispielsweise im Zusammenwirken mit der Überwachungsschnittstelle und einem entfernt angeordneten zentralen Bezahlsystem.

In einer Ausführungsform ist ein Assistenzsoftwaremodul vorgesehen, welches eingerichtet ist, den Füllstand der Zutaten und den Verbrauch der Zutaten regelmässig zu erfassen. Das Assistenzsoftwaremodul wird beim Nachfüllen von ersten Zutaten aktiviert, beispielsweise über Sensoren, welche das Nachfüllen von Zutaten überwachen. Falls andere Zutaten ebenfalls einen geringen Füllstand aufweisen, wird durch das Assistenzsoftwaremodule ein entsprechender Hinweis erzeugt, welcher auf einem Display dargestellt wird, beispielsweise auf dem Display des Bedienteils des Getränke-Zubereitungsmoduls 1, auf den Display des Getränkeautomaten, auf dem Display eines mobilen Geräts oder auf einem anderen Display. Das Assistenzsoftwaremodul kann zusätzlich ein Prognosemodul umfassen, welches aufgrund des Füllstands von Zutatenbehälter und dem aus der Vergangenheit bestimmten zu erwartenden zukünftigen Verbrauchs eine Zeitangabe bestimmt, wann der Wechsel eines betreffenden Zutatenbehälters zu erwarten ist. Das Bedienpersonal kann somit entscheiden, ob sich der sofortige Wechsel eines nur teilweise geleerten Zutatenbehälters lohnt oder ob der Wechsel auf einen späteren Zeitpunkt verlegt werden kann.

In einer Ausführungsform ist ein Ausrüstungsmodul vorgesehen, welches eingerichtet ist, den Verbrauch und das Nachfüllen von Zutaten regelmässig zu erfassen. Die an einem Standort beliebten Zutaten können im Voraus nicht einfach festgelegt werden. So kann an einem Standort welcher z.B. von vielen Schülern frequentiert wird, der Verbrauch von Zutaten je nach aktuellem Geschmack der Schüler variieren, beispielsweise aufgrund von neu erschienen Werbekampagnen. Das Ausrüstungsmodul ist eingerichtet, um aufgrund von vergangenen Werten die optimale Menge von Zutaten eines betreffenden Standorts zu ermitteln und beim Nachfüllen von Zutaten das Bedienpersonal auf einem Display darauf hinweisen, dass beispielsweise statt eine 1l Verpackung eines bestimmten Sirups eine 2l Verpackung einzusetzen ist. Es ist vorgesehen, dass das Ausrüstungsmodul Daten betreffend den Verbrauch von Zutaten an eine Zentrale übermittelt, welche aufgrund der übermittelten Daten bestimmt, ob Zutatenmodule auszuwechseln oder zu ergänzen sind, worauf dementsprechend Servicepersonal oder Bedienpersonal aufgeboten werden kann, die betreffenden Änderungen am Selbstbedienungs-Getränkeautomaten durchzuführen.

Figur 5 zeigt einen geschlossenen Selbstbedienungs-Getränkeautomaten 7, welcher ein Selbstbedienungsbedienteil 5 und einen Selbstbedienungsausgabebereich 71 aufweist, insbesondere für Becher 4, in welchen ein zubereitetes Getränk zur Verfügung gestellt wird. Der Selbstbedienungs-Getränkeautomat 7 wird je nach Standort ausgeführt, also besonders sicher vor Vandalen, mit besonders vielen Zusatzutensilien wie Becher, Tücher, Rührstäbchen, etc. oder besonders auffällig, um Werbeaufdrucke optimal zur Geltung zu bringen. Die im Selbstbedienungs-Getränkeautomaten 7 angeordneten Module sind im Allgemeinen von aussen nicht sichtbar, wobei spezielle Modulteile wie z.B. ein durchsichtiger Kaffeebehälter sichtbar sind, um die hohe Qualität der zubereiteten Getränke zu unterstreichen. Wie aus Figur 5 ersichtlich ist, ist über dem Selbstbedienungsbedienteil 5 eine Gehäusefläche 72 sichtbar. Diese Gehäusefläche 72 kann für Werbeaufdrucke genutzt werden. In besonderen Ausführungsformen kann hier bevorzugt eine zweiter Display eingesetzt werden, welcher ebenfalls von der Recheneinheit des Selbstbedienungsteils 5 angesteuert wird. Auf diese Weise können zusätzliche Informationen oder Werbung ohne Unterbrechung während der Bedienung durch den Benutzer des Selbstbedienungs-Getränkeautomaten 7 angezeigt werden. Ausserdem kann dieser Display während der Standbyzeit des Automaten grossflächige Informationen anzeigen, die auch aus Distanz gut wahrnehmbar sind. Während der Bedienung können dies Informationen (abhängig von der gewünschten Steuerung) auf einen anderen Zoomfaktor eingestellt werden, so dass der Benutzer die Informationen kontinuierlich wahrnehmen kann.

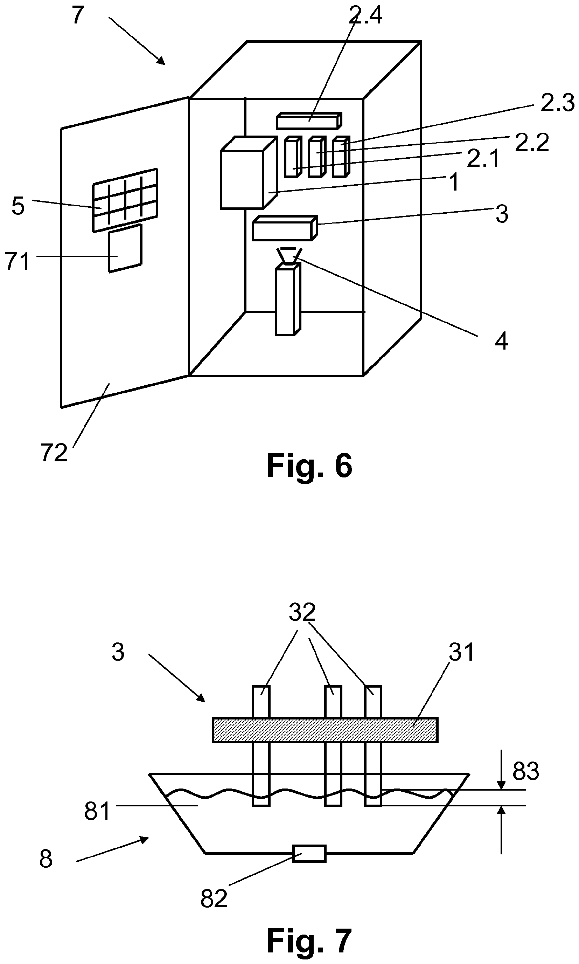

Figur 6 zeigt einen geöffneten Selbstbedienungs-Getränkeautomaten 7, welcher eine Türe 73 aufweist, die insbesondere sowohl vom Bedienpersonal als auch von Servicepersonal geöffnet werden kann. Das Selbstbedienungsbedienteil 5 kann an der Türe 73 schwenkbar angeordnet sein, so dass das Display des Selbstbedienungsbedienteils 5 auch bei geöffneter Türe 73 abgelesen werden kann. Bei geöffneter Türe 73 ist das im Selbstbedienungs-Getränkeautomaten 7 angeordneten Getränke-Zubereitungsmodul 1 sowie die Zusatzmodule 2.1, 2.2, 2.3, 2.4 und das Auslaufmodul 3 zugänglich. Das Getränke-Zubereitungsmodul 1 ist insbesondere nur vom Servicepersonal vollständig zugänglich, damit komplexere Arbeiten nicht vom weniger geschulten Bedienpersonal durchgeführt werden kann. Die Türe 73 und das Getränke-Zubereitungsmodul 1 weisen dazu zwei voneinander unabhängige Schliesssysteme auf. Hingegen sind insbesondere die Zutatenbehälter der Zusatzmodule 2.1, 2.2, 2.3, 2.4 dem Bedienpersonal zugänglich, sodass dieses bei Bedarf Milch, Pulver, Sirupe und Reinigungsmittel nachfüllen kann. Ebenso sind allfällige Kaffeebehälter am Getränke-Zubereitungsmodul 1 für den Austausch oder das Nachfüllen durch das Bedienpersonal vorgesehen. Wie in Figur 6 schematisch dargestellt, ist der Becher 4 auf einer Einrichtung angeordnet, mit welcher der korrekte Abstand zwischen dem Becher 4 und dem Auslaufmodul 3 gewährleistet wird, insbesondere ermöglicht diese Einrichtung eine Verstellung des Bechers 4 in der Höhe.

Für die Anordnung des Getränke-Zubereitungsmoduls 1 und der Zusatzmodule 2.1, 2.2, 2.3, 24 sind insbesondere Hängevorrichtungen vorgesehen, also beispielsweise Schrauben, welche für den Eingriff in entsprechende Nuten des Getränke-Zubereitungsmoduls 1 und der Zusatzmodule 2.1, 2.2, 2.3, 2.4 vorgesehen sind.

Das Getränke-Zubereitungsmodul und die Zusatzmodule sind nach der Art eines Master/Slave Konzepts ausgeführt. Der Master wird durch das Getränke-Zubereitungsmodul 1 gebildet, an welchem die Zusatzmodule als Slaves angeschlossen sind. Das Master/Slave Konzept erstreckt sich nicht nur auf die Steuerung und die Steuerungsleitungen der Slaves durch den Master, sondern auch auf die Versorgung der Slaves mit elektrischer Energie, sowie je nach Art des Slaves resp. des betreffenden Zusatzmoduls wird dieses mit Kaltwasser, Heisswasser oder Dampf versorgt. Die Steuerungsleitungen und weiteren Leitungen zwischen dem Master und den Slaves sind insbesondere sternförmig gebildet, d.h. jeder Slave ist am Master über eine Steuerungsleitung und bei Bedarf weiteren Leitungen angeschlossen. Dies im Gegensatz zu einer Busanordnung, bei welcher der Master und die Slaves an einem gemeinsamen Leitungsbus angeschlossen wären. In einer Ausführungsform ist ein übergeordneter Master vorgesehen, insbesondere ein Selbstbedienungsbedienteil, welcher mit dem hier beschriebenen Master zusammenwirkt.

In einer Ausführungsvariante umfasst das Selbstbedienungsbedienteil 5 ein Werbesoftwaremodul, um über das Display oder Zusatzdisplays Werbung abzuspielen oder anzuzeigen, welche auf einem lokalen Datenspeicher oder einem Datenspeicher in einer Computerzentrale abgespeichert ist. Die Werbung kann beispielsweise abgespielt werden, falls der Selbstbedienungs-Getränkeautomat 7 nicht benutzt wird. In einer Ausführungsvariante ist ein Überwachungsmodul vorgesehen, welches gewährleistet, dass Bedienelemente für die Bedienung des Selbstbedienungs-Getränkeautomaten 7 sofort dargestellt werden, wenn sich ein Benutzer dem Automaten nähert, wobei insbesondere ein Näherungssensor vorgesehen ist. In einer Ausführungsvariante sind Teile des Displays oder einer von mehreren Displays reserviert, um mindestens einen Startknopf anzuzeigen, mit welchem ein Benutzer die Bedienung des Automaten starten kann. Der Startknopf kann alternativ als Hardwareschalter beispielsweise neben dem Selbstbedienungsbedienteil 5 angeordnet und entsprechend markiert sein. Ferner kann in einer Ausführungsform ein Watchdogsoftwaremodul vorgesehen sein, welches das Selbstbedienungsbedienteil 5 daraufhin überwacht, dass zu jeder Zeit auf einem Display des Selbstbedienungsbedienteils 5 mindestens ein Startknopf vorhanden ist zum Starten des Vorgangs für den Bezug eines Getränks. Die Watchdogfunktion wird in einer Ausführungsvariante durch eine Zentrale überwacht oder durchgeführt.

In einer Ausführungsform ist ein Bezugssoftwaremodul vorgesehen, um dem Benutzer beim Zubereiten des Getränks zusätzliche Informationen auf einem Display des Selbstbedienungsbedienteil 5 anzuzeigen, wie z.B. Werbung, Informationen zum Getränk, etc. Das Bezugssoftwaremodul ist beispielsweise eingerichtet, um insbesondere auf dem Getränke-Zubereitungsmodul 1 eine Abfrage betreffend die zu erwartenden Zubereitungszeit durchzuführen. Die Auswahl der auf dem Display dargestellten Informationen erfolgt insbesondere entsprechend dieser zu erwartenden Zubereitungszeit, welche beispielsweise im Getränke-Zubereitungsmodul 1 berechnet oder nachgeschlagen wird. So kann bei einer langen Zubereitungszeit, beispielsweise bei einem Cappuccino eine längere Werbung und bei einer kurzen Zubereitungszeit wie Heisswasser für einen Tee eine Information zur optimalen Brühzeit verschiedener Teebeutel angezeigt werden.

Figur 7 zeigt schematisch einen Reinigungsschritt. Der Auslauf 3 umfasst in einer Ausführungsform eine Halterung 31 für Schläuche 32. Beim einem Reinigungsschritt wird eine Reinigungsschale 8 wie in Figur 7 schematisch dargestellt in einem Abstand zur Halterung 31 angeordnet, indem entweder die Halterung 31 über die Reinigungsschale 8 bewegt wird oder indem die Reinigungsschale 8 unter die Halterung 31 bewegt wird. Die Reinigungsschale wird beispielsweise über die in einem Reinigungsmodul eines Zusatzmoduls 2.1, 2.2, 2.3, 2.4 enthaltene Reinigungsflüssigkeit und mit im Getränke-Zubereitungsmodul 1 enthaltenen heissem Wasser gefüllt. Es wird ein Füllstand eingestellt, dass die Schläuche 31 mit einer Eintauchtiefe 83 in die Reinigungsflüssigkeit 81 eintaucht. Die Schläuche 31 werden in der Reinigungsflüssigkeit 81 für eine bestimmte Zeit belassen oder darin bewegt. Über die Auslassöffnung 82 wird die Reinigungsschale entleert und beispielsweise anschliessend nur eine Spülung mit kalten oder heissem Wasser durchgeführt, welches in die Reinigungsschale geführt wird. In einer alternativen Ausführungsvariante erfolgt die Entleerung durch Überlaufen der Reinigungsflüssigkeit, Abkippen oder Absaugen der Reinigungsflüssigkeit. Der Reinigungsschritt wird ausgelöst aufgrund einer Reinigungssoftware des Getränke-Zubereitungsmoduls 1, aufgrund einer an einem Bedienteil durchgeführten Eingabe oder in einer anderen Weise.

### BEZUGSZEICHEN

- 1: Getränke-Zubereitungsmodul
- 11: Wasseranschluss
- 12: Zubereitungseinrichtung
- 121: Bohnenbehälter
- 122: Kaffeeboiler
- 123: Heisswasserboiler
- 124: Dampfboiler
- 125: Kaffeemühle
- 126: Kaffeebrüheinheit
- 127: Wasserpumpe
- 13: Kommunikationsschnittstelle (local)
- 14: Steuereinheit
- 15: Getränkeauslauf
- 16.1, 16.2, 16.3, 16.4: Zusatzmodulschnittstellen
- 17: Zusatzfluidschnittstellen
- 18: Auslaufmodulschnittstelle
- 19: Überwachungsschnittstelle (remote)
- 100: Modulgehäuse
- 2.1, 2.2, 2.3, 2.4: Zusatzmodule
- 2.1: Milchmodul
- 2.11: Zutatenbehälter für das Milchmodul (Milchbehälter)
- 2.12: Milchmodulschnittstelle
- 2.13: Milchpumpe
- 2.14: Milchfüllstandsüberwachung
- 2.15: Quetschventil
- 2.16: Luftpumpe
- 2.17: Spülventil
- 2.19: Milchauslauf
- 2.2: Pulvermodul
- 2.21: Zutatenbehälter für das Pulvermodul (Pulverbehälter)
- 2.22: Pulvermodulschnittstelle
- 2.23: Fördereinrichtung
- 2.24: Pulverfüllstandsüberwachung
- 2.25: Mixereinrichtung
- 2.26: Wasserventil
- 2.29: Pulvergetränkeauslauf
- 2.3: Sirupmodul
- 2.31: Zutatenbehälter für das Sirupmodul (Sirupbehälter)
- 2.32: Sirupmodulschnittstelle
- 2.33: Siruppumpe
- 2.34: Sirupfüllstandsüberwachung
- 2.39: Sirupauslauf
- 2.4: Reinigungsmodul
- 2.41: Zutatenbehälter für das Reinigungsmodul (Reinigungsbehälter)
- 3: Auslaufmodul
- 31: Halterung
- 32: Schläuche
- 4: Trinkbecher
- 5: Selbstbedienungsbedienteil (Touchscreen)
- 6: Wasserzuführung (Leitungsnetz/Behälter)
- 7: Selbstbedienungs-Getränkeautomat
- 71: Selbstbedienungsausgabebereich
- 72: Türe
- 8: Reinigungsschale
- 81: Reinigungsflüssigkeit
- 82: Auslauföffnung
- 83: Eintauchtiefe

## Patentansprüche

1. Selbstbedienungs-Getränkeautomat (7), umfassend:
einen Getränkeschrank,
eine Halterung für ein Getränke-Zubereitungsmodul (1),
eine oder mehrere Halterungen für ein oder mehrere Zusatzmodule (2.1, 2.2, 2.3, 2.4),
ein Getränke-Zubereitungsmodul (1),
ein oder mehrere Zusatzmodule (2.1, 2.2, 2.3, 2.4),
ein Auslaufmodul (3);
das Getränke-Zubereitungsmodul (1) umfassend:
einen Wasseranschluss (11) und eine Zubereitungseinrichtung (12) zur Zubereitung eines Getränks mit am Wasseranschluss (11) bereitgestelltem Wasser,
eine Kommunikationsschnittstelle (13) und eine Steuereinheit (14), an welche über die Kommunikationsschnittstelle (13) Getränke-Zubereitungsparameter übermittelbar sind, und welche eingerichtet ist, die Zubereitungseinrichtung (12) zu steuern, um aufgrund der Getränke-Zubereitungsparameter ein Getränk zuzubereiten, einen Getränkeauslauf (15) zum Ableiten des von der Zubereitungseinrichtung (12) zubereiteten Getränks,
mindestens eine Zusatzmodulschnittstelle (16.1, 16.2, 16.3, 16.4) zur Verbindung der Steuereinheit (14) mit mindestens einem Zusatzmodul (2.1, 2.2, 2.3, 2.4), wobei die mindestens eine Zusatzmodulschnittstelle (16.1, 16.2, 16.3, 16.4) für den Anschluss von mindestens einem der folgenden Zusatzmodule eingerichtet ist: ein Milchmodul (2.1), ein Pulvermodul (2.2), ein Sirupmodul (2.3), ein Reinigungsmodul (2.4),
mindestens eine Zusatzfluidschnittstelle (17) für die Verbindung der Zubereitungseinrichtung (12) mit mindestens einem Zusatzmodul (2.1, 2.2, 2.3, 2.4), wobei die mindestens eine Zusatzfluidschnittstelle (17) eingerichtet ist, um zwischen der Zubereitungseinrichtung (12) und einem oder mehreren Zusatzmodulen (2.1, 2.2, 2.3, 2.4) eine Fluidverbindung herzustellen, so dass über die die mindestens eine Zusatzfluidschnittstelle (17) Wasser, Heisswasser, Dampf und/oder Reinigungsflüssigkeit zwischen dem Getränke-Zubereitungsmodul (1) und dem Zusatzmodul (2.1, 2.2, 2.3, 2.4) ausgetauscht werden können;
wobei das eine oder die mehreren Zusatzmodule (2.1, 2.2, 2.3, 2.4) eine der folgenden Modulfunktionen aufweist: Milchmodul (2.1), Pulvermodul (2.2), Sirupmodul (2.3), Reinigungsmodul (2.4), und wobei das eine oder die mehreren Zusatzmodule umfassen: eine Zusatzmodulschnittstelle für den Anschluss an das Getränke-Zubereitungsmodul, wobei die Zusatzmodulschnittstelle für die Übertragung von elektrischer Energie und/oder elektrischer Steuersignale eingerichtet ist;
wobei die Zusatzmodule Schnittstellen (2.12, 2.22, 2.32) aufweisen für den Anschluss des Zusatzmoduls an das Getränke-Zubereitungsmodul, und
wobei das Auslaufmodul (3) mindestens eines der folgenden Merkmale umfasst: Milchkanal, Dampfkanal, Milch-Dampf-Mischkammer, Pulvergetränkkanal, Kaffeekanal.

2. Selbstbedienungs-Getränkeautomat (7) nach Anspruch 1, das Getränke-Zubereitungsmodul (1) weiter umfassend mindestens eine der folgenden Komponenten: eine Wasserpumpe, einen Kaffeeboiler, einen Heisswasserboiler, einen Dampfboiler, eine Kaffeebrüheinheit, eine Kaffeemühle, eine Antriebseinrichtung für eine Kaffeebrüheinheit, eine Kaffeesatz-Auswurfeinrichtung, eine Service-Bedieneinheit.

3. Selbstbedienungs-Getränkeautomat (7) nach Anspruch 1 oder 2, wobei die mindestens eine Zusatzfluidschnittstelle (17) für eine der folgenden Verbindungen eingerichtet ist: zwischen einem Heisswasserboiler der Zubereitungseinrichtung (1.4) und einem Pulvermodul (2.2), zwischen einem Dampfboiler der Zubereitungseinrichtung (1.4) und einem Milchmodul (2.1), zwischen der Zubereitungseinrichtung (1.4) und einem Reinigungsmodul (2.4), zwischen einem Reinigungsmodul (2.4) und einem Milchmodul (2.1), zwischen einem Reinigungsmodul (2.4) und einem Auslaufmodul (3).

4. Selbstbedienungs-Getränkeautomat (7) nach einem der vorangegangenen Ansprüche, das Getränke-Zubereitungsmodul (1) weiter umfassend ein Modulgehäuse (100), welches insbesondere abgedichtet ausgeführt ist.

5. Selbstbedienungs-Getränkeautomat (7) nach Anspruch 4, wobei das Modulgehäuse (100) ganz oder teilweise nur mit einem Spezialwerkzeug offenbar ist.

6. Selbstbedienungs-Getränkeautomat (7) nach einem der vorangegangenen Ansprüche, das Getränke-Zubereitungsmodul (1) weiter umfassend eine Überwachungsschnittstelle (19) zur Datenübertragung mit einer entfernten Datenverarbeitungsvorrichtung wie beispielsweise einer Computerzentrale zur Überwachung von Getränke-Zubereitungsmodulen (1).

7. Selbstbedienungs-Getränkeautomat (7) nach einem der vorangegangenen Ansprüche, das Getränke-Zubereitungsmodul (1) weiter umfassend einen Datenspeicher zur Abspeicherung von Betriebsdaten wie beispielsweise Anzahl zubereiteter Getränke, Füllstand von Zutatenbehälter und/oder zur Abspeicherung von Getränkerezeptdaten.

8. Selbstbedienungs-Getränkeautomat (7) nach einem der vorangegangenen Ansprüche, das Getränke-Zubereitungsmodul (1) weiter umfassend ein Reinigungssoftwaremodul zur selbsttätigen Reinigung des Getränke-Zubereitungsmoduls und erforderlichenfalls daran angeschlossene Zusatzmodule (2.1, 2.2, 2.3, 2.4).

9. Selbstbedienungs-Getränkeautomat (7) nach einem der vorangegangenen Ansprüche, das Getränke-Zubereitungsmodul (1) weiter umfassend ein Koordinationssoftwaremodul zur Koordination der Zubereitung von Getränken mit externen Vorrichtungen, welche mit dem Getränke-Zubereitungsmodul (1) zusammenwirken.

10. Selbstbedienungs-Getränkeautomat (7) nach einem der vorangegangenen Ansprüche, das Getränke-Zubereitungsmodul (1) weiter umfassend ein Funktionstestsoftwaremodul zum Festlegen, welche Funktionen vom Getränke-Zubereitungsmodul durchgeführt werden und welche Funktionen von externen Vorrichtungen durchgeführt werden, welche mit dem Getränke-Zubereitungsmodul (1) zusammenwirken.

11. Selbstbedienungs-Getränkeautomat (7) nach einem der vorangegangenen Ansprüche, das Getränke-Zubereitungsmodul (1) weiter umfassend eine Abrechnungs-Softwarekomponente für die Abrechnung von zubereiteten Getränken.

12. Selbstbedienungs-Getränkeautomat (7) nach einem der vorangegangenen Ansprüche, das Getränke-Zubereitungsmodul (1) weiter umfassend ein Assistenzsoftwaremodul zum Bestimmen von Bedienungsarbeiten, welche vom Bedienpersonal durchzuführen sind.

13. Selbstbedienungs-Getränkeautomat (7) nach einem der vorangegangenen Ansprüche, das Getränke-Zubereitungsmodul (1) weiter umfassend ein Ausrüstungsmodul zum Bestimmen von am besten geeigneten Zusatzmodulen (2.1, 2.2, 2.3, 2.4) und/oder Zutatenmengen.

14. Selbstbedienungs-Getränkeautomat (7) nach einem der vorangegangenen Ansprüche, das Zusatzmodul (2.1, 2.2, 2.3, 2.4) weiter umfassend eine Wasser- und/oder eine Dampfschnittstelle für den Anschluss an eine Wasser- und/oder Dampfschnittstelle des Getränke-Zubereitungsmoduls (1).

15. Selbstbedienungs-Getränkeautomat (7) nach einem der vorangegangenen Ansprüche, wobei am Auslaufmodul (3) eine oder mehrere Komponenten wie beispielsweise ein Milchschäumerkopf als Verbrauchsteil austauschbar angeordnet sind.

16. Der Selbstbedienungs-Getränkeautomat (7) nach einem der vorangegangenen Ansprüche, wobei die Halterung für das Getränke-Zubereitungsmodul (1) und/oder eines oder mehrere Zusatzmodule (2.1, 2.2, 2.3, 2.4) als Hängevorrichtung ausgeführt sind.

17. Der Selbstbedienungs-Getränkeautomat (7) nach einem der vorangegangenen Ansprüche, wobei ein Selbstbedienungsbedienteil für die Eingabe von Getränkezubereitungsparametern und die Auslösung der Zubereitung eines Getränks vorgesehen ist, insbesondere ein Touchscreen und vorzugsweise ein daran angeschlossener Personal Computer.

18. Selbstbedienungs-Getränkeautomat (7) nach einem der vorangegangenen Ansprüche, wobei eine Türe (72) vorgesehen ist, um einen Zugang zum Getränke-Zubereitungsmodul (1) und erforderlichenfalls eines oder mehrere Zugangsmodule (2.1, 2.2, 2.3, 2.4) zu ermöglichen, wobei insbesondere ein Bedienteil wie ein Selbstbedienungsbedienteil (72) schwenkbar vorgesehen ist, so dass das Bedienteil auch bei geöffneter Türe benutzbar bleibt.

19. Selbstbedienungs-Getränkeautomat (7) nach einem der vorangegangenen Ansprüche, wobei die Türe (72) eine erste Schliessvorrichtung aufweist und das Getränke-Zubereitungsmodul (1) eine zweite Schliessvorrichtung aufweist.

20. Selbstbedienungs-Getränkeautomat (7) nach einem der vorangegangenen Ansprüche, wobei eine Reinigungssicherung vorgesehen ist, um während einer automatischen Reinigung von Gerätekomponenten den Zugang zu den Gerätekomponenten welche gereinigt werden zu verschliessen.

21. Selbstbedienungs-Getränkeautomat (7) nach einem der vorangegangenen Ansprüche, weiter umfassend ein Werbesoftwaremodul zum Abspielen von Werbung auf einem Display des Selbstbedienungs-Getränkeautomaten (7).

22. Selbstbedienungs-Getränkeautomat (7) nach einem der vorangegangenen Ansprüche, weiter umfassend ein Watchdogsoftwaremodul zur Überwachung, dass auf einem Selbstbedienungsbedienteil immer die Möglichkeit für die Auswahl eines Getränks angezeigt wird.

23. Selbstbedienungs-Getränkeautomat (7) nach einem der vorangegangenen Ansprüche, weiter umfassend ein Bezugssoftwaremodul zum Anzeigen von Zusatzinformationen auf einem Display während der Zubereitung eines Getränks.

24. Selbstbedienungs-Getränkeautomat (7) nach einem der vorangegangenen Ansprüche, weiter umfassend eine Gehäuseoberfläche (72), welche für die Darstellung von Zusatzinformationen oder Werbung geeignet ist, wobei die Gehäuseoberfläche (72) insbesondere ein Zusatzdisplay aufweist.

25. Selbstbedienungs-Getränkeautomat (7) nach einem der vorangegangenen Ansprüche, weiter umfassend ein Computerprogrammprodukt umfassend Programmcode für die Steuerung von einem oder mehreren Prozessoren des Getränke-Zubereitungsmoduls (1) und/oder des Selbstbedienungs-Getränkeautomaten (7), wobei das Computerprogrammprodukt folgende Schritte steuert:
Empfang von Getränke-Zubereitungsparameter, welche über eine Kommunikationsschnittstelle (13) an eine Steuereinheit (14) übermittelt werden,
Steuern der Zubereitungseinrichtung (12) und am Wasseranschluss (11) bereitgestelltes Wasser zur Zubereitung eines Getränks, und
erforderlichenfalls Steuern von Zusatzmodulen (2.1, 2.2, 2.3, 2.4) zur Durchführung von zusätzlichen Zubereitungsschritten.

26. Selbstbedienungs-Getränkeautomat (7) nach Anspruch 25, das Computerprogrammprodukt weiter umfassend Programmcode für eines oder mehrere der folgenden Softwaremodule: ein MMI-Softwaremodul (MMI: Man Machine Interface), insbesondere zur Kontrolle der auf einem Display angezeigten Informationen und zur Entgegennahme von Benutzereingaben, ein Kontroll-Softwaremodul, insbesondere zur Steuerung der Maschine bei der Herstellung von Kaffee, vorzugsweise inklusive die Steuerung der Abläufe zum Betrieb einer Kaffeemaschine, ein Leistungs-Softwaremodul, insbesondere für schnell durchzuführende Funktionen wie beispielsweise das Schalten von Ausgängen, das Überwachen der Boilertemperaturen, das Überwachen von Strömen.

27. Selbstbedienungs-Getränkeautomat (7) nach Anspruch 25 oder 26, das Computerprogrammprodukt, weiter umfassend Programmcode für ein Abrechnungssoftwaremodul, insbesondere zur Kommunikation über eine Abrechnung-Schnittstelle mit einem Zahlungssystem.

28. Selbstbedienungs-Getränkeautomat (7) nach einem der Ansprüche 25 bis 27, das Computerprogrammprodukt weiter umfassend Programmcode für ein Datenbanksoftwaremodul, insbesondere zum Abspeichern von Daten und Konfigurationen in einer Datenbank.

29. Selbstbedienungs-Getränkeautomat (7) nach einem der Ansprüche 25 bis 28, das Computerprogrammprodukt weiter umfassend Programmcode für ein Protokollmodul, insbesondere für das Auslösen der Zubereitung eines Getränks aufgrund eines zwischen dem Getränke-Zubereitungsmodul und einem Bedienteil definierten Protokolls.

30. Selbstbedienungs-Getränkeautomat (7) nach einem der Ansprüche 25 bis 29, das Computerprogrammprodukt weiter umfassend Programmcode für ein Telemetriesoftwaremodul, insbesondere zur Überwachung und Abrechnung der Zubereitung von Getränken mit einer Computerzentrale zur Überwachung von Selbstbedienungs-Getränkeautomaten.

31. Selbstbedienungs-Getränkeautomat (7) nach einem der Ansprüche 25 bis 30, das Computerprogrammprodukt weiter umfassend Programmcode für ein Erweiterungssoftwaremodul, insbesondere um dem Getränke-Zubereitungsmodul und/oder dem Selbstbedienungs-Getränkeautomaten von externen Erweiterungsmodulen zusätzliche Funktionalitäten zur Verfügung zu stellen.

32. Selbstbedienungs-Getränkeautomat (7) nach einem der Ansprüche 25 bis 31, das Computerprogrammprodukt weiter umfassend Programmcode für ein Prüfsoftwaremodul, insbesondere zur Erfassung eines RFID-Codes oder eines Matrix-Codes.

## Claims

1. Self-service beverage dispensing machine (7), comprising:
a beverage cabinet,
a holder for a beverage preparation module (1),
one or more holders for one or more additional modules (2.1, 2.2, 2.3, 2.4),
a beverage preparation module (1),
one or more additional modules (2.1, 2.2, 2.3, 2.4),
an outlet module (3);
the beverage preparation module (1) comprising:
a water connection (11) and a preparation device (12) for preparing a beverage using water provided at the water connection (11),
a communications interface (13) and a control unit (14), to which beverage preparation parameters can be transmitted via the communications interface (13), and which is configured to control the preparation device (12) in order to prepare a beverage based on the beverage preparation parameters,
a beverage outlet (15) for channelling away the beverage prepared by the preparation device (12),
at least one additional module interface (16.1, 16.2, 16.3, 16.4) for connecting the control unit (14) to at least one additional module (2.1, 2.2, 2.3, 2.4), wherein the at least one additional module interface (16.1, 16.2, 16.3, 16.4) is configured for the connection of at least one of the following additional modules: a milk module (2.1), a powder module (2.2), a syrup module (2.3), a cleaning module (2.4),
at least one additional fluid interface (17) for the connection of the preparation device (12) to at least one additional module (2.1, 2.2, 2.3, 2.4), wherein the at least one additional fluid interface (17) is configured to establish a fluid connection between the preparation device (12) and one or more additional modules (2.1, 2.2, 2.3, 2.4) so that water, hot water, steam and/or cleaning fluid can be exchanged between the beverage preparation module (1) and the additional module (2.1, 2.2, 2.3, 2.4) via the at least one additional fluid interface (17);
wherein the one or the plurality of additional modules (2.1, 2.2, 2.3, 2.4) has one of the following module functions: milk module (2.1), powder module (2.2), syrup module (2.3), cleaning module (2.4), and wherein the one or the plurality of additional modules comprise: an additional module interface for the connection to the beverage preparation module, wherein the additional module interface is configured for the transmission of electrical energy and/or electrical control signals;
wherein the additional modules have interfaces (2.12, 2.22, 2.32) for the connection of the additional module to the beverage preparation module, and
wherein the outlet module (3) comprises at least one of the following features: milk channel, steam channel, mixed milk/steam chamber, powdered beverage channel, coffee channel.

2. Self-service beverage dispensing machine (7) according to Claim 1, the beverage preparation module (1) further comprising at least one of the following components: a water pump, a coffee boiler, a hot water boiler, a steam boiler, a coffee brewing unit, a coffee grinder, a drive device for a coffee brewing unit, a coffee grounds ejection device, a service operator control unit.

3. Self-service beverage dispensing machine (7) according to Claim 1 or 2, wherein the at least one additional fluid interface (17) is configured for one of the following connections: between a hot water boiler of the preparation device (1.4) and a powder module (2.2), between a steam boiler of the preparation device (1.4) and a milk module (2.1), between the preparation device (1.4) and a cleaning module (2.4), between a cleaning module (2.4) and a milk module (2.1), between a cleaning module (2.4) and an outlet module (3).

4. Self-service beverage dispensing machine (7) according to one of the preceding claims, the beverage preparation module (1) further comprising a module housing (100), which is embodied, in particular, so as to be sealed off.

5. Self-service beverage dispensing machine (7) according to Claim 4, wherein the module housing (100) can be opened fully or in part only using a special tool.

6. Self-service beverage dispensing machine (7) according to one of the preceding claims, the beverage preparation module (1) further comprising a monitoring interface (19) for data transmission with a remote data processing apparatus such as, for example, a centralized computer system for monitoring beverage preparation modules (1).

7. Self-service beverage dispensing machine (7) according to one of the preceding claims, the beverage preparation module (1) further comprising a data memory for storing operating data such as, for example, the number of prepared beverages, the filling state of ingredient containers and/or for storing beverage recipe data.

8. Self-service beverage dispensing machine (7) according to one of the preceding claims, the beverage preparation module (1) further comprising a cleaning software module for the automatic cleaning of the beverage preparation module and, if necessary, additional modules (2.1, 2.2, 2.3, 2.4) connected thereto.

9. Self-service beverage dispensing machine (7) according to one of the preceding claims, the beverage preparation module (1) further comprising a coordination software module for coordinating the preparation of beverages with external apparatuses that interact with the beverage preparation module (1).

10. Self-service beverage dispensing machine (7) according to one of the preceding claims, the beverage preparation module (1) further comprising a functionality test software module for ascertaining which functions are carried out by the beverage preparation module and which functions are carried out by external apparatuses that interact with the beverage preparation module (1).

11. Self-service beverage dispensing machine (7) according to one of the preceding claims, the beverage preparation module (1) further comprising a billing software component for billing prepared beverages.

12. Self-service beverage dispensing machine (7) according to one of the preceding claims, the beverage preparation module (1) further comprising an assistance software module for determining operator control actions that are to be carried out by operator control personnel.

13. Self-service beverage dispensing machine (7) according to one of the preceding claims, the beverage preparation module (1) further comprising an equipment module for determining best suited additional modules (2.1, 2.2, 2.3, 2.4) and/or quantities of ingredients.

14. Self-service beverage dispensing machine (7) according to one of the preceding claims, the additional module (2.1, 2.2, 2.3, 2.4) further comprising a water interface and/or a steam interface for connection to a water interface and/or steam interface of the beverage preparation module (1).

15. Self-service beverage dispensing machine (7) according to one of the preceding claims, wherein one or more components, such as, for example, a milk frothing head, are arranged at the outlet module (3) so as to be able to be exchanged as consumable parts.

16. Self-service beverage dispensing machine (7) according to one of the preceding claims, wherein the holder for the beverage preparation module (1) and/or of one or more additional modules (2.1, 2.2, 2.3, 2.4) is embodied as a hanging apparatus.

17. Self-service beverage dispensing machine (7) according to one of the preceding claims, wherein a self-service operator control part is provided for inputting beverage preparation parameters and initiating the preparation of a beverage, in particular a touchscreen and preferably a personal computer connected thereto.

18. Self-service beverage dispensing machine (7) according to one of the preceding claims, wherein a door (72) is provided in order to make it possible to access the beverage preparation module (1) and, if necessary, one or more access modules (2.1, 2.2, 2.3, 2.4), wherein, in particular, an operator control part such as a self-service operator control part (72) is provided so as to be able to pivot so that the operator control part can still be used even when the door is open.

19. Self-service beverage dispensing machine (7) according to one of the preceding claims, wherein the door (72) has a first closure apparatus and the beverage preparation module (1) has a second closure apparatus.

20. Self-service beverage dispensing machine (7) according to one of the preceding claims, wherein a cleaning locking system is provided in order during automatic cleaning of appliance components to close the access to the appliance components that are cleaned.

21. Self-service beverage dispensing machine (7) according to one of the preceding claims, further comprising an advertising software module for playing advertising on a display of the self-service beverage dispensing machine (7).

22. Self-service beverage dispensing machine (7) according to one of the preceding claims, further comprising a watchdog software module for monitoring that the option for the selection of a beverage is always displayed on a self-service operator control part.

23. Self-service beverage dispensing machine (7) according to one of the preceding claims, further comprising a reference software module for displaying additional information on a display during the preparation of a beverage.

24. Self-service beverage dispensing machine (7) according to one of the preceding claims, further comprising a housing surface (72), which is suitable for presenting additional information or advertising, wherein the housing surface (72) has, in particular, an additional display.

25. Self-service beverage dispensing machine (7) according to one of the preceding claims, further comprising a computer program product comprising program code for controlling one or more processors of the beverage preparation module (1) and/or of the self-service beverage dispensing machine (7), wherein the computer program product controls the following steps:
reception of beverage preparation parameters, which are transmitted to a control unit (14) via a communications interface (13),
controlling the preparation device (12) and water provided at the water connection (11) for the purpose of preparing a beverage, and,
if necessary, controlling additional modules (2.1, 2.2, 2.3, 2.4) for carrying out additional preparation steps.

26. Self-service beverage dispensing machine (7) according to Claim 25, the computer program product further comprising program code for one or more of the following software modules: an MMI (man-machine interface) software module, in particular for controlling the information displayed on a display and for receiving user inputs, a control software module, in particular for controlling the machine during the production of coffee, preferably including the control of the processes for operating a coffee machine, a power software module, in particular for functions to be carried out rapidly such as, for example, the switching of outputs, the monitoring of the boiler temperatures, the monitoring of currents.

27. Self-service beverage dispensing machine (7) according to Claim 25 or 26, the computer program product further comprising program code for a billing software module, in particular for communication with a payment system via a billing interface.

28. Self-service beverage dispensing machine (7) according to one of Claims 25 to 27, the computer program product further comprising program code for a database software module, in particular for storing data and configurations in a database.

29. Self-service beverage dispensing machine (7) according to one of Claims 25 to 28, the computer program product further comprising program code for a protocol module, in particular for initiating the preparation of a beverage based on a protocol defined between the beverage preparation module and an operator control part.

30. Self-service beverage dispensing machine (7) according to one of Claims 25 to 29, the computer program product further comprising program code for a telemetry software module, in particular for monitoring and billing the preparation of beverages using a centralized computer system for monitoring self-service beverage dispensing machines.

31. Self-service beverage dispensing machine (7) according to one of Claims 25 to 30, the computer program product further comprising program code for an expansion software module, in particular in order to make additional functionalities available to the beverage preparation module and/or to the self-service beverage dispensing machine from external expansion modules.

32. Self-service beverage dispensing machine (7) according to one of Claims 25 to 31, the computer program product further comprising program code for a checking software module, in particular for detecting an RFID code or a matrix code.

## Revendications

1. Distributeur automatique de boissons en self-service (7), comprenant :
une armoire à boissons,
une fixation pour un module de préparation de boissons (1),
une ou plusieurs fixations pour un ou plusieurs modules additionnels (2.1, 2.2, 2.3, 2.4),
un module de préparation de boissons (1),
un ou plusieurs modules additionnels (2.1, 2.2, 2.3, 2.4),
un module d'écoulement (3) ;
le module de préparation de boissons (1) comprenant :
un branchement d'eau (11) et un système préparateur (12), pour la préparation d'une boisson avec de l'eau mise à disposition sur le branchement d'eau (11),
une interface de communication (13) et une unité de commande (14), à laquelle des paramètres de préparation de boissons sont transmissibles via l'interface de communication (13), et laquelle est aménagée pour commander le système préparateur (12) pour préparer une boisson sur la base des paramètres de préparation de boissons,
une sortie de boissons (15) pour évacuer les boissons préparées par le système préparateur (12),
au moins une interface pour module additionnel (16.1, 16.2, 16.3, 16.4), destinée à relier l'unité de commande (14) avec au moins un module additionnel (2.1, 2.2, 2.3, 2.4), l'au moins une interface pour module additionnel (16.1, 16.2, 16.3, 16.4) étant aménagée pour le branchement d'au moins l'un des modules additionnels suivants : un module de lait (2.1), un module de poudre (2.2), un module de sirop (2.3), un module de nettoyage (2.4),
au moins une interface pour fluide additionnel (17), destinée à relier le système préparateur (12) avec au moins un module additionnel (2.1, 2.2, 2.3, 2.4), l'au moins une interface pour fluide additionnel (17) étant aménagée pour établir une liaison fluidique entre le système préparateur (12) et un ou plusieurs modules additionnels (2.1, 2.2, 2.3, 2.4), de sorte que par l'intermédiaire de l'au moins une interface pour fluide additionnel (17), de l'eau, de l'eau chaude, de la vapeur et/ou du liquide de nettoyage puissent être échangés entre le module de préparation de boissons(1) et le module additionnel (2.1, 2.2, 2.3, 2.4) ;
l'un ou les plusieurs modules additionnels (2.1, 2.2, 2.3, 2.4) assurant l'une des fonctions de module suivantes : module de lait (2.1), module de poudre (2.2), module de sirop (2.3), module de nettoyage (2.4), et l'un ou les plusieurs modules additionnels comprenant : une interface pour module additionnel destinée à être branchée sur le module de préparation de boissons, l'interface pour module additionnel étant aménagée pour la transmission d'énergie électrique et/ou de signaux de commande électriques ;
les modules additionnels comportant des interfaces (2.12, 2.22, 2.32) pour le branchement du module additionnel sur le module de préparation de boissons, et
le module d'écoulement (3) présentant au moins l'une des caractéristiques suivantes : conduit de lait, conduit de vapeur, chambre de mélange lait-vapeur, conduit de boisson en poudre, conduit de café.

2. Distributeur automatique de boissons en self-service (7) selon la revendication 1, le module de préparation de boissons (1) comprenant par ailleurs au moins l'un des composants suivants : une pompe à eau, une chaudière à café, une chaudière à eau-chaude, une chaudière à vapeur, une unité d'infusion de café, un moulin à café, un système d'entraînement pour l'unité d'infusion de café, un éjecteur de marc de café, une unité de commande de service.

3. Distributeur automatique de boissons en self-service (7) selon la revendication 1 ou 2, l'au moins une interface pour fluide additionnel (17) étant aménagée pour établir l'une des liaisons suivantes : entre une chaudière d'eau chaude du système préparateur (1.4) et un module de poudre (2.2), entre une chaudière à vapeur du système préparateur (1.4) et un module de lait (2.1), entre le système préparateur (1.4) et un module de nettoyage (2.4), entre un module de nettoyage (2.4) et un module de lait (2.1), entre un module de nettoyage (2.4) et un module d'écoulement (3).

4. Distributeur automatique de boissons en self-service (7) selon l'une quelconque des revendications précédentes, le module de préparation de boissons (1) comprenant par ailleurs un boîtier de module (100), lequel est réalisé notamment en version hermétique.

5. Distributeur automatique de boissons en self-service (7) selon la revendication 4, le boîtier de module (100) étant susceptible d'être ouvert totalement ou partiellement uniquement avec un outil spécial.

6. Distributeur automatique de boissons en self-service (7) selon l'une quelconque des revendications précédentes, le module de préparation de boissons (1) comprenant une interface de supervision (19) pour le transfert de données avec un dispositif de traitement de données distant, comme par exemple une centrale informatique pour la supervision de modules de préparation de boissons (1).

7. Distributeur automatique de boissons en self-service (7) selon l'une quelconque des revendications précédentes, le module de préparation de boissons (1) comprenant par ailleurs une mémoire de données destinée à mémoriser des données de service, comme par exemple le nombre de boissons préparées, le niveau de remplissage de réservoirs d'ingrédients et/ou destinée à mémoriser des données de recettes de boissons.

8. Distributeur automatique de boissons en self-service (7) selon l'une quelconque des revendications précédentes, le module de préparation de boissons (1) comprenant par ailleurs un module logiciel de nettoyage pour le nettoyage automatique du module de préparation de boissons et si nécessaire, des modules additionnels (2.1, 2.2, 2.3, 2.4) branchés sur ce dernier.

9. Distributeur automatique de boissons en self-service (7) selon l'une quelconque des revendications précédentes, le module de préparation de boissons (1) comprenant par ailleurs un module logiciel de coordination pour la coordination de la préparation de boissons avec des dispositifs externes, lesquels coopèrent avec le module de préparation de boissons (1).

10. Distributeur automatique de boissons en self-service (7) selon l'une quelconque des revendications précédentes, le module de préparation de boissons (1) comprenant par ailleurs un module logiciel de fonction, destiné à fixer les fonctions qui doivent être réalisées par le module de préparation de boissons et les fonctions qui doivent être réalisées par des dispositifs externes, lesquels coopèrent avec le module de préparation de boissons (1).

11. Distributeur automatique de boissons en self-service (7) selon l'une quelconque des revendications précédentes, le module de préparation de boissons (1) comprenant par ailleurs un composant logiciel de décompte, pour le décompte des boissons préparées.

12. Distributeur automatique de boissons en self-service (7) selon l'une quelconque des revendications précédentes, le module de préparation de boissons (1) comprenant par ailleurs un module logiciel d'assistance, destiné à déterminer des travaux de service qui doivent être réalisés par le personnel de service.

13. Distributeur automatique de boissons en self-service (7) selon l'une quelconque des revendications précédentes, le module de préparation de boissons (1) comprenant par ailleurs un module d'équipement, destiné à déterminer les modules additionnels (2.1, 2.2, 2.3, 2.4) et/ou les quantités d'ingrédients les plus approprié(e)s.

14. Distributeur automatique de boissons en self-service (7) selon l'une quelconque des revendications précédentes, le module additionnel (2.1, 2.2, 2.3, 2.4) comprenant par ailleurs une interface d'eau et/ou de vapeur, destinée à être branchée sur l'interface d'eau et/ou de vapeur du module de préparation de boissons (1).

15. Distributeur automatique de boissons en self-service (7) selon l'une quelconque des revendications précédentes, sur le module d'écoulement (3) étant placés de manière interchangeable, en tant que consommables un ou plusieurs composants, comme par exemple une tête émulsionneuse de lait.

16. Le distributeur automatique de boissons en self-service (7) selon l'une quelconque des revendications précédentes, la fixation pour le module de préparation de boissons (1) et/ou un ou plusieurs modules additionnels (2.1, 2.2, 2.3, 2.4) étant réalisée sous la forme d'un dispositif d'accrochage.

17. Le distributeur automatique de boissons en self-service (7) selon l'une quelconque des revendications précédentes, une pièce de commande en self-service étant prévue pour la saisie de paramètres de préparation de boissons et pour le déclenchement de la préparation d'une boisson, notamment un écran tactile et de préférence un PC branché sur celui-ci.

18. Distributeur automatique de boissons en self-service (7) selon l'une quelconque des revendications précédentes, une porte (72) étant prévue pour permettre un accès au module de préparation de boissons (1) et si nécessaire, à un ou plusieurs modules d'accès (2.1, 2.2, 2.3, 2.4), notamment une pièce de commande telle qu'une pièce de commande en self-service (72) étant prévue en version pivotante, de sorte qu'une pièce de commande reste également utilisable lorsque la porte est ouverte.

19. Distributeur automatique de boissons en self-service (7) selon l'une quelconque des revendications précédentes, la porte (72) comportant un premier dispositif de fermeture et le module de préparation de boissons (1) comportant un deuxième dispositif de fermeture.

20. Distributeur automatique de boissons en self-service (7) selon l'une quelconque des revendications précédentes, une sécurité au nettoyage étant prévue, pour fermer l'accès aux composants de l'appareil qui doivent être nettoyés lors d'un nettoyage automatique de composants de l'appareil.

21. Distributeur automatique de boissons en self-service (7) selon l'une quelconque des revendications précédentes, comprenant par ailleurs un module logiciel publicitaire, destiné à diffuser une publicité sur un écran du distributeur automatique de boissons en self-service (7).

22. Distributeur automatique de boissons en self-service (7) selon l'une quelconque des revendications précédentes, comprenant par ailleurs un module logiciel superviseur, destiné à superviser que sur une pièce de commande en self-service, la possibilité de sélectionner une boisson soit toujours affichée.

23. Distributeur automatique de boissons en self-service (7) selon l'une quelconque des revendications précédentes, comprenant par ailleurs un module logiciel de référence, destiné à afficher des informations supplémentaires sur un écran pendant la préparation d'une boisson.

24. Distributeur automatique de boissons en self-service (7) selon l'une quelconque des revendications précédentes, comprenant par ailleurs une surface de boîtier (72), qui est apte à représenter des informations supplémentaires ou des publicités, la surface de boîtier (72) étant notamment un écran supplémentaire.

25. Distributeur automatique de boissons en self-service (7) selon l'une quelconque des revendications précédentes, comprenant par ailleurs un produit de programme informatique comprenant un code programme pour la commande d'un ou de plusieurs processeurs du module de préparation de boissons (1) et/ou du distributeur automatique de boissons en self-service (7), le produit de programme informatique commandant les étapes suivantes :
la réception de paramètres de préparation de boissons, lesquels sont transmis via une interface de communication (13) à une unité de commande (14),
la commande du système préparateur (12) et de l'eau mise à disposition au branchement d'eau (11) pour la préparation d'une boisson, et
si nécessaire, la commande de modules additionnels (2.1, 2.2, 2.3, 2.4), pour la réalisation d'étapes de préparation supplémentaires.

26. Distributeur automatique de boissons en self-service (7) selon la revendication 25, le produit de programme informatique comprenant par ailleurs un code programme pour un ou plusieurs des modules logiciels suivants : un module logiciel MMI (MMI : Man Machine Interface), notamment destiné à contrôler les informations affichées sur un écran et pour la réception de saisies d'utilisateurs, un module logiciel de contrôle, notamment destiné à commander la machine lors de la préparation de café, incluant de préférence la commande des cycles de fonctionnement d'une machine à café, un module logiciel de puissance, notamment pour des fonctions qui doivent être exécutées rapidement, comme par exemple la commutation de sorties, la supervision des températures des chaudières, la supervision de flux.

27. Distributeur automatique de boissons en self-service (7) selon la revendication 25 ou 26, le produit de programme informatique comprenant par ailleurs un code programme pour un module logiciel de décompte, notamment pour la communication via une interface de décompte avec un système de paiement.

28. Distributeur automatique de boissons en self-service (7) selon l'une quelconque des revendications 25 à 27, le produit de programme informatique comprenant par ailleurs un code programme pour un module logiciel de base de données, notamment destiné à mémoriser des données et configurations dans une base de données.

29. Distributeur automatique de boissons en self-service (7) selon l'une quelconque des revendications 25 à 28, le produit de programme informatique comprenant par ailleurs un code programme pour un module de protocole, notamment pour le déclenchement de la préparation d'une boisson sur la base d'un protocole défini entre le module de préparation de boissons et une pièce de commande.

30. Distributeur automatique de boissons en self-service (7) selon l'une quelconque des revendications 25 à 29, le produit de programme informatique comprenant par ailleurs un code programme pour un module logiciel télémétrique, destiné notamment à superviser et à décompter la préparation de boissons avec une centrale informatique dédiée à la supervision de distributeurs automatiques de boissons en self-service.

31. Distributeur automatique de boissons en self-service (7) selon l'une quelconque des revendications 25 à 30, le produit de programme informatique comprenant par ailleurs un code programme pour un module logiciel d'extension, destiné notamment à mettre à la disposition du module de préparation de boissons et/ou du distributeur automatique de boissons en self-service des fonctionnalités additionnelles de modules d'extension externes.

32. Distributeur automatique de boissons en self-service (7) selon l'une quelconque des revendications 25 à 31, le produit de programme un code programme pour un module logiciel de vérification, destiné notamment à détecter un code RFID ou un code matriciel.
